(19) Europäisches Patentamt / European Patent Office / Office européen des brevets

(11) **EP 4 101 520 A1**

(12) **EUROPÄISCHE PATENTANMELDUNG**

(43) Veröffentlichungstag:
**14.12.2022  Patentblatt 2022/50**

(21) Anmeldenummer: **22176278.4**

(22) Anmeldetag: **31.05.2022**

(51) Internationale Patentklassifikation (IPC):
**B01D 61/08** (2006.01)     **B01D 61/10** (2006.01)
**B01D 61/12** (2006.01)     **B01D 61/18** (2006.01)
**B01D 61/20** (2006.01)     **B01D 61/22** (2006.01)
**B01D 61/28** (2006.01)     **B01D 61/30** (2006.01)
**B01D 61/32** (2006.01)     **B01D 65/08** (2006.01)

(52) Gemeinsame Patentklassifikation (CPC):
**B01D 61/12; B01D 61/08; B01D 61/10;**
**B01D 61/18; B01D 61/20; B01D 61/22;**
**B01D 61/28; B01D 61/30; B01D 61/32;**
**B01D 65/08;** B01D 2311/04; B01D 2311/08;
B01D 2311/14; B01D 2311/16; B01D 2313/243;

(Forts.)

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(30) Priorität: **10.06.2021  EP 21178687**

(71) Anmelder: **Levitronix GmbH**
**8005 Zürich (CH)**

(72) Erfinder:
• **Sibilia, Antony**
**8157 Dielsdorf (CH)**
• **Stöckli, Simon**
**8305 Dietlikon (CH)**

(74) Vertreter: **IPS Irsch AG**
**Langfeldstrasse 88**
**8500 Frauenfeld (CH)**

(54) **VORRICHTUNG UND VERFAHREN ZUR TANGENTIALFLUSSFILTRATION EINES FLUIDS**

(57)    Es wird eine Vorrichtung zur Tangentialflussfiltration eines Fluids vorgeschlagen, umfassend eine Filtereinrichtung (2), welche eine erste Fluidöffnung (21) und eine zweite Fluidöffnung (22) für das Fluid aufweist, sowie ein Filterelement (25) und eine Permeatöffnung (23) zum Abführen eines aus dem Fluid ausgefilterten Permeats, wobei die Vorrichtung ferner eine erste Strömungsverbindung (31) umfasst, mit welcher die erste Fluidöffnung (21) mit einem Vorratsbehälters (8) für das Fluid verbindbar ist, sowie eine zweite Strömungsverbindung (32), mit welcher die zweite Fluidöffnung (22) mit dem Vorratsbehälter (8) für das Fluid verbindbar ist, wobei in der ersten Strömungsverbindung (31) eine erste Zentrifugalpumpe (41) vorgesehen ist, mit welcher das Fluid vom Vorratsbehälter (8) zu der Filtereinrichtung (2) förderbar ist, wobei eine erste Kontrolleinheit (51) zur Ansteuerung der ersten Zentrifugalpumpe (41) vorgesehen ist, und wobei die Filtereinrichtung (2) derart ausgestaltet ist, dass das Fluid zur Tangentialflussfiltration in der Filtereinrichtung (2) im Wesentlichen parallel zum Filterelement (26) strömen kann. In der zweiten Strömungsverbindung (32) ist eine zweite Zentrifugalpumpe (42) für das Fluid vorgesehen ist, mit welcher ein Gegendruck an der zweiten Fluidöffnung (22) erzeugbar ist, wobei eine zweite Kontrolleinheit (52) zur Ansteuerung der zweiten Zentrifugalpumpe (42) vorgesehen ist. Ferner wird ein Verfahren zur Tangentialflussfiltration vorgeschlagen.

Fig.1

**(Forts. nächste Seite)**

(52) Gemeinsame Patentklassifikation (CPC): (Forts.)
B01D 2321/10; B01D 2321/20; B01D 2321/2025

**Beschreibung**

Die Erfindung betrifft eine Vorrichtung und ein Verfahren zur Tangentialflussfiltration eines Fluids gemäss dem Oberbegriff des unabhängigen Patentanspruchs der jeweiligen Kategorie. Die Erfindung betrifft ferner einen Satz von Einmalteilen für eine solche Vorrichtung.

Die Tangentialflussfiltration, die auch als Querstromfiltration oder Cross-Flow-Filtration bezeichnet wird, ist ein bekanntes Verfahren zum Filtrieren von Fluiden, das beispielsweise in der biotechnologischen und in der chemischen Industrie sowie in der Lebensmittel- und Pharmaindustrie verwendet wird. Bei der Tangentialflussfiltration wird das zu filtrierende Fluid, beispielsweise eine Suspension, mit einer von Null verschiedenen Strömungsgeschwindigkeit parallel zu einem Filterelement, z. B. einer Filtermembran, geführt und das Permeat, das auch als Filtrat bezeichnet wird, quer zur Strömungsrichtung entnommen. Durch eine relativ hohe Strömungsgeschwindigkeit soll dabei so weit wie möglich vermieden werden, dass sich ein Filterkuchen bzw. eine Deckschicht auf dem Filterelement aufbaut.

Häufig wir die Tangentialflussfiltration als Batch Prozess durchgeführt, bei welchem das zu filtrierende Fluid, beispielsweise eine Suspension, einem Vorratsbehälter entnommen wird, mittels einer Förderpumpe durch die Filtereinrichtung mit dem darin angeordneten Filterelement gefördert und dann von der Filtereinrichtung zum Vorratsbehälter zurückgeführt wird. Das Permeat, welches in der Filtereinrichtung quer zur Strömungsrichtung, durch das Filterelement hindurchtritt, wird durch eine Permeatöffnung abgeführt bzw. entnommen. Für die Strömungsverbindungen zwischen dem Vorratsbehälter und der Filtereinrichtung werden häufig flexible Schläuche bzw. flexible Schlauchverbindungen gewählt.

In solchen Prozessen kann die Tangentialflussfiltration zum Aufkonzentrieren eines Fluids, z. B. einer Suspension verwendet werden, indem durch mehrfaches Zirkulieren der Suspension und jeweiliges Ausfiltrieren einer flüssigen Komponente, beispielsweise Wasser oder eine Nährlösung, die jeweils als Permeat entnommen wird, die im Vorratsbehälter befindliche Suspension immer höher konzentriert wird. Es ist aber auch möglich, diejenige Substanz, welche durch die Tangentialflussfiltration gewonnen werden soll, beispielsweise ein Protein, als Permeat auszuscheiden.

Es ist insbesondere auch bekannt, die Tangentialflussfiltration in Kombination mit Bioreaktoren zu verwenden, sowohl in kontinuierlichen Prozessen als auch in Batch Prozessen, beispielsweise in Verfahren zur Züchtung von Zellen oder anderem biologischen Material. So sind beispielsweise Perfusionsverfahren mit Bioreaktoren bekannt, die zur kontinuierlichen Kultivierung von Zellen eingesetzt werden, wobei beispielsweise Stoffwechselprodukte der Zellen mittels Tangentialflussfiltration ausgeschieden werden und die Zellen in den Bioreaktor zurückgeführt werden. Dabei kann dem Bioreaktor beispielsweise kontinuierlich eine Nährlösung für die Zellen zugeführt werden, wodurch die Masse oder das Volumen der ausgefilterten Komponenten ersetzt werden. Insbesondere auch bei solchen Anwendungen in Perfusions-Bioreaktoren besteht heute eine zunehmende Tendenz, Komponenten der Vorrichtung als Einmalteile auszugestalten, um aufwändige Sterilisationsprozesse zu vermeiden oder auf ein Minimum zu reduzieren.

Ein Parameter, welcher die Effizienz der Tangentialflussfiltration massgeblich beeinflusst, ist der Druckabfall über das Filterelement, durch welchen das Permeat durch das Filterelement bewegt wird. Eine häufig als Mass für diesen Parameter benutzte Grösse ist der Transmembrandruck (TMP), welcher als das arithmetische Mittel des Druckabfalls über das Filterelement definiert ist. Wenn man mit P1 den Druck des Fluids am Eingang des Filterelements bezeichnet, mit P2 den Druck am Ausgang des Filterelements und mit P3 den Druck an der Permeatöffnung, so ist der Transmembrandruck TMP definiert als:

$$TMP = (P1+P2)/2 - P3$$

Der Transmembrandruck wird auch als transmembrane Druckdifferenz bezeichnet. Um den Fluss des Permeats durch das Filterelement zu erhöhen, ist es eine bekannte Massnahme den Strömungswiderstand für das Fluid stromabwärts der Filtereinrichtung zu erhöhen, wodurch der Druck P2 am Ausgang des Filterelements vergrössert wird. Hierdurch resultiert eine Erhöhung des Transmembrandrucks TMP, wodurch der Permeatstrom vergrössert wird.

Üblicherweise wird der Strömungswiderstand stromabwärts der Filtereinrichtung und damit der Druck P2 am Ausgang des Filterelements durch eine Verengung des freien Strömungsquerschnitts für das Fluid realisiert. Es ist bekannt, diese Verengung durch den Einsatz von Proportional- oder (Schlauch-) Quetschventilen (Pinch Valves) zu realisieren. Diese Technologie hat jedoch erhebliche Nachteile.

Da der Zusammenhang zwischen der Stellung des Quetschventils und dem Transmembrandruck selbst bei einer konstanten Leistung der Förderpumpe hochgradig nichtlinear ist, kann ein gewünschter Transmembrandruck nur durch langwieriges Justieren des Quetschventils eingestellt werden. Zudem gibt es nur einen sehr schmalen Bereich für die Einstellung des Quetschventils, in welchem eine zumindest näherungsweise Einstellung des gewünschten Transmembrandrucks überhaupt zuverlässig möglich ist. Dieser Bereich kann bei bekannten Quetschventilen beispielsweise einem Hub der Quetschvorrichtung von deutlich weniger als einem Millimeter entsprechen.

Durch die Verengung des Strömungsquerschnitts im Quetschventil können sehr hohe Scherkräfte erzeugt werden, die einen schädlichen Einfluss auf das Fluid, z.B. auf in einer Suspension enthaltene Partikel, Zellen oder Makromoleküle wie beispielsweise Proteine, haben können. Somit kann es zu unerwünschten Degradationen in dem Fluid oder in Komponenten des Fluids kommen. Diese hohen Scherkräfte werden insbesondere auch durch die hohen Strömungsgeschwindigkeiten verursacht, welche aus der Verkleinerung des Strömungsquerschnitts resultieren.

Ein weiterer nachteiliger Effekt ist es, dass durch die Deformation des Schlauches in dem Quetschventil Partikel aus dem Schlauch gelöst werden, welche dann das Fluid verunreinigen. Dies ist insbesondere auch bei biotechnologischen oder pharmazeutischen Anwendungen ein erhebliches Risiko.

Ausgehend von diesem Stand der Technik ist es daher eine Aufgabe der Erfindung, eine Vorrichtung und ein Verfahren zur Tangentialflussfiltration eines Fluids vorzuschlagen, bei welchem sich der Transmembrandruck und/oder der Tangentialfluss in einfacher Weise mit sehr hoher Genauigkeit und in einem möglichst grossen Betriebsbereich zuverlässig einstellen lässt.

Die diese Aufgabe lösende Gegenstände der Erfindung sind durch die Merkmale des unabhängigen Patentanspruchs der jeweiligen Kategorie gekennzeichnet.

Erfindungsgemäss wird also eine Vorrichtung zur Tangentialflussfiltration eines Fluids vorgeschlagen, umfassend eine Filtereinrichtung, welche eine erste Fluidöffnung und eine zweite Fluidöffnung für das Fluid aufweist, sowie ein Filterelement und eine Permeatöffnung zum Abführen eines aus dem Fluid ausgefilterten Permeats, wobei die Vorrichtung ferner eine erste Strömungsverbindung umfasst, mit welcher die erste Fluidöffnung mit einem Vorratsbehälters für das Fluid verbindbar ist, sowie eine zweite Strömungsverbindung, mit welcher die zweite Fluidöffnung mit dem Vorratsbehälter für das Fluid verbindbar ist, wobei in der ersten Strömungsverbindung eine erste Zentrifugalpumpe vorgesehen ist, mit welcher das Fluid vom Vorratsbehälter zu der Filtereinrichtung förderbar ist, wobei eine erste Kontrolleinheit zur Ansteuerung der ersten Zentrifugalpumpe vorgesehen ist, und wobei die Filtereinrichtung derart ausgestaltet ist, dass das Fluid zur Tangentialflussfiltration in der Filtereinrichtung im Wesentlichen parallel zum Filterelement strömen kann. In der zweiten Strömungsverbindung ist eine zweite Zentrifugalpumpe für das Fluid vorgesehen, mit welcher ein Gegendruck an der zweiten Fluidöffnung erzeugbar ist, wobei eine zweite Kontrolleinheit zur Ansteuerung der zweiten Zentrifugalpumpe vorgesehen ist.

Erfindungsgemäss ist also ausser der ersten Zentrifugalpumpe, deren primäre Funktion die Förderung des Fluids durch die Filtereinrichtung bzw. die Zirkulation des Fluids ist, eine zweite Zentrifugalpumpe in der zweiten Strömungsverbindung vorgesehen, welche mit der zweiten Fluidöffnung der Filtereinrichtung verbunden ist. Diese zweite Zentrifugalpumpe arbeitet entgegengesetzt zu der ersten Zentrifugalpumpe und kann somit einen Gegendruck an der zweiten Fluidöffnung erzeugen, sodass der Druck an der zweiten Fluidöffnung grösser wird. Hierdurch erhöht sich der Druckabfall über das Filterelement, wodurch sich der Permeatstrom vergrössern lässt. Dabei ist es ganz besonders vorteilhaft, dass es für die Erhöhung des Drucks an der zweiten Fluidöffnung keines Quetschens der zweiten Strömungsverbindung bedarf, und dass der freie Strömungsquerschnitt in der zweiten Strömungsverbindung auch nicht durch andere Massnahmen geändert werden muss. Hierdurch lassen sich die hohen Nicht-Linearitäten der aus dem Stand der Technik bekannten Vorrichtungen vermeiden. Durch die zweite Zentrifugalpumpe lässt sich der Druck des Fluids an der zweiten Fluidöffnung mit hoher Genauigkeit, in einfacher Weise, reproduzierbar und über einen grossen Betriebsbereich zuverlässig einstellen.

Durch den erfindungsgemäss möglichen Verzicht auf Massnahmen zur Reduzierung des Strömungsquerschnitts in der zweiten Strömungsverbindung, also beispielsweise durch den Verzicht auf das Quetschen einer Schlauchverbindung, lassen sich auch die damit verbundenen stark erhöhten Strömungsgeschwindigkeiten vermeiden, wodurch die auf das Fluid bzw. seine Komponenten wirkenden Scherkräfte sehr gering sind. Dies ist insbesondere im Hinblick auf eine möglichst schonende Behandlung des Fluids bzw. seiner Komponenten sehr vorteilhaft. Ein besonderer Vorteil der erfindungsgemässen Vorrichtung ist es daher, das die Vorrichtung frei von Quetschventilen oder anderen Elementen zum Reduzieren des Strömungsquerschnitts, insbesondere in der zweiten Strömungsverbindung ausgestaltet werden kann.

Zudem lassen sich durch die erfindungsgemässe Lösung starke mechanische Deformationen in der zweiten Strömungsverbindung vermeiden, wie sie z. B. bei der Verwendung von Quetschventilen unvermeidlich sind. Dadurch lässt es sich insbesondere verhindern, dass Partikel aus der zweiten Strömungsverbindung, beispielsweise eine Schlauchverbindung, austreten und das Fluid verunreinigen.

Gemäss einer bevorzugten Ausgestaltung umfasst die Vorrichtung einen Durchflusssensors zur Ermittlung des Durchflusses des Fluids durch die erste Strömungsverbindung, wobei die ersten Kontrolleinheit derart ausgestaltet ist, dass sie einen Soll-Wert für den Durchfluss über einen Betriebsparameter der ersten Zentrifugalpumpe, insbesondere die Drehzahl, einstellen kann. Bei dieser Ausgestaltung wird also die erste Zentrifugalpumpe dazu verwendet, um einen vorgebbaren Soll-Wert für den Durchfluss des Fluids durch die erste Strömungsverbindung einzustellen oder einzuregeln.

Ferner ist es bevorzugt, dass eine Mehrzahl von Drucksensoren vorgesehen ist, welche so angeordnet sind, dass mit den Drucksensoren ein Transmembrandruck über das Filterelement ermittelbar ist, wobei die zweite Kontrolleinheit derart ausgestaltet ist, dass sie einen Soll-Wert für den Transmembrandruck über einen Betriebsparameter der zweiten Zentrifugalpumpe, insbesondere die Drehzahl, einstellen kann. Bei dieser Ausführungsform wird also mittels der zweiten Zentrifugalpumpe der Transmembrandruck auf einen vorgebbaren Soll-Wert eingestellt bzw. eingeregelt.

Vorzugsweise umfasst dabei die Mehrzahl der Drucksensoren einen ersten Drucksensor, mit welchem ein erster Druck des Fluids an der ersten Fluidöffnung ermittelbar ist, sowie einen zweiten Drucksensor, mit welchem ein zweiter Druck des Fluids an der zweiten Fluidöffnung ermittelbar ist, sowie einen dritten Drucksensor, mit welchem ein dritter Druck an der Permeatöffnung ermittelbar ist. Auf diese Weise kann der Ist-Wert des Transmembrandrucks in sehr einfacher und genauer Weise ermittelt werden.

Gemäss einer ebenfalls bevorzugten Ausgestaltung ist eine zentrale Kontrolleinheit vorgesehen, welche mit der ersten Kontrolleinheit und mit der zweiten Kontrolleinheit signalverbunden ist, wobei die zentrale Kontrolleinheit zur Ansteuerung der ersten Kontrolleinheit und der zweiten Kontrolleinheit ausgestaltet ist. Ausser einer voneinander unabhängigen Ansteuerung der ersten und der zweiten Zentrifugalpumpe ist es also auch möglich, die zentrale Kontrolleinheit vorzusehen welche koordiniert die erste und die zweite Kontrolleinheit für die erste bzw. die zweite Zentrifugalpumpe ansteuert. Ein Vorteil der Ausgestaltung mit einer zentralen Kontrolleinheit ist es, dass in der Ansteuerung bzw. der Regelung die quadratischen Terme eliminiert werden können, welche für eine einzelne Zentrifugalpumpe daraus resultieren, dass der Druck, genauer gesagt die Förderhöhe, proportional ist zum Quadrat der Drehzahl der Zentrifugalpumpe.

Besonders bevorzugt umfasst die zweite Zentrifugalpumpe einen Rotor zum Fördern des Fluids, sowie einen Stator, der mit dem Rotor einen elektromagnetischen Drehantrieb zum Rotieren des Rotors um eine axiale Richtung bildet, wobei der Rotor einen magnetisch wirksamen Kern umfasst, sowie eine Mehrzahl von Flügeln zum Fördern des Fluids, wobei der Stator als Lager- und Antriebsstator ausgestaltet ist, mit welchem der Rotor berührungslos magnetisch antreibbar und berührungslos magnetisch bezüglich des Stators lagerbar ist. Diese Ausgestaltung der Zentrifugalpumpe mit einem magnetisch gelagerten Rotor, der gleichzeitig der Pumpenrotor der Zentrifugalpumpe ist und der Rotor des elektromagnetischen Drehantriebs zum Antreiben der Rotation, ermöglicht eine äusserst kompakte, platzsparende und leistungsfähige Ausgestaltung der zweiten Zentrifugalpumpe. Durch die berührungslose magnetische Lagerung des Rotors bedarf es auch keiner mechanischen Lager, welche beispielsweise durch Abrieb zu Verunreinigungen des Fluids führen könnten. Auch ermöglicht die berührungslose magnetische Lagerung des Rotors eine äusserst präzise und einfache Einstellung des von der zweiten Zentrifugalpumpe generierten Drucks, beispielsweise über die Drehzahl des Rotors.

Alternativ, aber vorzugsweise ergänzend, umfasst die erste Zentrifugalpumpe einen Rotor zum Fördern des Fluids, sowie einen Stator, der mit dem Rotor einen elektromagnetischen Drehantrieb zum Rotieren des Rotors um eine axiale Richtung bildet, wobei der Rotor einen magnetisch wirksamen Kern umfasst, sowie eine Mehrzahl von Flügeln zum Fördern des Fluids, wobei der Stator als Lager- und Antriebsstator ausgestaltet ist, mit welchem der Rotor berührungslos magnetisch antreibbar und berührungslos magnetisch bezüglich des Stators lagerbar ist.

Es ist also möglich, nur die erste Zentrifugalpumpe mit einem berührungslos magnetisch antreibbaren und berührungslos magnetisch bezüglich des Stators lagerbaren Rotor auszugestalten, oder nur die zweite Zentrifugalpumpe mit einem berührungslos magnetisch antreibbaren und berührungslos magnetisch bezüglich des Stators lagerbaren Rotor auszugestalten. Bevorzugt sind sowohl die erste als auch die zweite Zentrifugalpumpe jeweils mit einem berührungslos magnetisch antreibbaren und berührungslos magnetisch bezüglich des Stators lagerbaren Rotor ausgestaltet.

Im Hinblick auf die magnetische Lagerung des Rotors ist es besonders bevorzugt, dass jeder Rotor jeweils in einer zur axialen Richtung senkrechten radialen Ebene aktiv magnetisch gelagert ist, und in axialer Richtung sowie gegen Verkippungen passiv magnetisch stabilisiert ist.

Eine speziell bevorzugte Ausführungsform ist die Ausgestaltung als Tempelmotor, bei welcher jeder Stator jeweils eine Mehrzahl von Spulenkernen aufweist, von denen jeder einen Längsschenkel umfasst, welcher sich in axialer Richtung erstreckt, sowie einen in der radialen Ebene angeordneten Querschenkel, welcher sich von dem Längsschenkel in einer radialen Richtung erstreckt, und wobei an jedem Längsschenkel mindestens eine konzentrierte Wicklung angeordnet ist, welche den jeweiligen Längsschenkel umgibt. Die Ausgestaltung als Tempelmotor ist eine besonders kompakte und gleichzeitig leistungsfähige Ausführungsform.

Gemäss einer besonders bevorzugten Ausgestaltung umfasst jede Zentrifugalpumpe jeweils eine Pumpeneinheit mit einem Pumpengehäuse, wobei das Pumpengehäuse einen Einlass und einen Auslass für das zu fördernde Fluid umfasst, wobei der Rotor im Pumpengehäuse angeordnet ist, und eine Mehrzahl von Flügeln zum Fördern des Fluids umfasst, und wobei die Pumpeneinheit derart ausgestaltet ist, dass die Pumpeneinheit in den Stator einsetzbar ist.

Vorzugsweise ist die erfindungsgemässe Vorrichtung derart ausgestaltet, dass einige Komponenten der Vorrichtung, insbesondere solche Komponenten, die mit dem Fluid in Kontakt kommen, als Einmalteile ausgestaltet sind, die bestimmungsgemäss nur einmal gebraucht werden können und nach diesem Gebrauch durch neue, das heisst unbenutzte Einmalteile ersetzt werden müssen.

Daher wird durch die Erfindung ferner ein Satz von Einmalteilen für eine erfindungsgemässe Vorrichtung vorgeschlagen, welcher zumindest die folgenden Komponenten umfasst, die jeweils als Einmalteile ausgestaltet sind:

- die Filtereinrichtung
- jeweils eine Pumpeneinheit für jede Zentrifugalpumpe,
- eine Mehrzahl von Schläuchen, welche zum Realisieren der ersten Strömungsverbindung und der zweiten Strömungsverbindung ausgestaltet ist,
- und optional einen Vorratsbehälter für das Fluid oder einen Einsatz für einen Vorratsbehälter.

Es versteht sich, dass diese Aufstellung der als Einmalteile ausgestalteten Komponenten nicht abschliessend ist. Der Satz von Einmalteilen kann auch noch weitere Einmalteile umfassen, beispielsweise Komponenten der Drucksensoren.

Durch die Erfindung wird ferner ein Verfahren zur Tangentialflussfiltration eines Fluids vorgeschlagen, bei dem das Fluid einer Filtereinrichtung zugeführt wird, welche eine erste Fluidöffnung und eine zweite Fluidöffnung für das Fluid aufweist, sowie ein Filterelement und eine Permeatöffnung zum Abführen eines aus dem Fluid ausgefilterten Permeats, wobei die Filtereinrichtung derart ausgestaltet ist, dass das Fluid zur Tangentialflussfiltration in der Filtereinrichtung im Wesentlichen parallel zum Filterelement geführt wird, bei welchem Verfahren ferner das Fluid mittels einer ersten Zentrifugalpumpe von einem Vorratsbehälters durch eine erste Strömungsverbindung zu der Filtereinrichtung gefördert wird, wobei das Fluid durch eine zweite Strömungsverbindung von der zweiten Fluidöffnung in den Vorratsbehälter rückführbar ist, und wobei die erste Zentrifugalpumpe mit einer ersten Kontrolleinheit angesteuert wird. Mit einer zweiten Zentrifugalpumpe, welche in der zweiten Strömungsverbindung vorgesehen ist, wird ein Gegendruck an der zweiten Fluidöffnung erzeugt, wobei die zweite Zentrifugalpumpe mit einer zweiten Kontrolleinheit angesteuert wird.

Die Vorteile des erfindungsgemässen Verfahren entsprechen sinngemäss denjenigen, die bereits im Zusammenhang mit der erfindungsgemässen Vorrichtung erläutert wurden.

Vorzugsweise wird mittels eines Durchflusssensors der Durchfluss des Fluids durch die erste Strömungsverbindung ermittelt, und es wird von der ersten Kontrolleinheit ein Soll-Wert für den Durchfluss über einen Betriebsparameter der ersten Zentrifugalpumpe, insbesondere die Drehzahl, eingestellt.

Auch ist es bevorzugt, dass mittels eines ersten Drucksensors ein erster Druck an der ersten Fluidöffnung ermittelt wird, oder mittels eines zweiten Drucksensors ein zweiter Druck an der zweiten Fluidöffnung, oder mittels eines dritten Drucksensors ein dritter Druck an der Permeatöffnung, wobei von der zweiten Kontrolleinheit ein Soll-Wert für den ersten Druck oder für den zweiten Druck oder für den dritten Druck über einen Betriebsparameter der zweiten Zentrifugalpumpe, insbesondere die Drehzahl, eingestellt wird.

Ferner ist es vorteilhaft, wenn mittels einer Mehrzahl von Drucksensoren ein Transmembrandruck über das Filterelement ermittelt wird, und von der ersten Kontrolleinheit oder von der zweiten Kontrolleinheit ein Soll-Wert für den Transmembrandruck über einen Betriebsparameter der ersten Zentrifugalpumpe oder über einen Betriebsparameter der zweiten Zentrifugalpumpe eingestellt wird, wobei der Betriebsparameter vorzugsweise die Drehzahl der ersten Zentrifugalpumpe oder der zweiten Zentrifugalpumpe ist.

Eine bevorzugte Variante besteht darin, dass die Tangentialflussfiltration in einem alternierenden Modus durchgeführt wird, welche einen ersten Betriebsmodus umfasst, in welchem das Fluid von der ersten Fluidöffnung zu der zweiten Fluidöffnung strömt, sowie einen zweiten Betriebsmodus, in welchem das Fluid von der zweiten Fluidöffnung zu der ersten Fluidöffnung strömt. Das heisst, die beiden Zentrifugalpumpen werden so angesteuert, dass das zu filternde Fluid im ersten Betriebsmodus von der ersten Zentrifugalpumpe durch die Filtereinrichtung zur zweiten Zentrifugalpumpe strömt und im zweiten Betriebsmodus in entgegengesetzter Richtung von der zweiten Zentrifugalpumpe durch die Filtereinrichtung zur ersten Zentrifugalpumpe. Dies lässt sich insbesondere dadurch erreichen, dass im zweiten Betriebsmodus die beiden Zentrifugalpumpen so angesteuert werden, dass der von der zweiten Zentrifugalpumpe an der zweiten Fluidöffnung generierte Gegendruck grösser ist als der von der ersten Pumpe am ersten Fluideingang der Filtereinrichtung generierte Druck.

Die Flussrichtung in den beiden Betriebsmodi wird jeweils durch den Differenzdruck der von den beiden Zentrifugalpumpen generierten Drücke bestimmt.

Ein Vorteil dieses Betriebs im alternierenden Modus besteht darin, dass das Filterelement wechselweise in entgegengesetzten Richtungen überströmt wird, wodurch sich Ablagerungen auf dem Filterelement bzw. der Aufbau eines unerwünschten Filterkuchens auf dem Filterelement für viele Anwendungen effizienter vermeiden lassen.

Im alternierenden Modus wird vorzugsweise nach einem vorgebbaren Zeitschema zwischen dem ersten Betriebsmodus und dem zweiten Betriebsmodus gewechselt.

Es ist möglich, den ersten Betriebsmodus und den zweiten Betriebsmodus in einem Verhältnis von 50% zu 50% durchzuführen, aber selbstverständlich sind auch andere Verhältnisse wie beispielsweise 75% zu 25% möglich. Die Wahl eines geeigneten Verhältnisses kann in Abhängigkeit vom jeweiligen Anwendungsfall ausgewählt oder für den jeweiligen Anwendungsfall optimiert werden.

Auch die Frequenz des Wechsels zwischen dem ersten und dem zweiten Betriebsmodus kann beliebig eingestellt werden. Ferner können für jeden Betriebsmodus der jeweilige Durchfluss oder einer der drei Drücke, nämlich der Druck an der ersten Fluidöffnung, der Druck an der zweiten Fluidöffnung oder der Druck an der Permeatöffnung, und damit auch der Transmembrandruck beliebig eingestellt werden.

Weitere vorteilhafte Massnahmen und Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der Zeichnung zeigen (teilweise im Schnitt):

Fig. 1:    eine schematische Darstellung eines ersten Ausführungsbeispiels einer erfindungsgemässen Vorrichtung zur Tangentialflussfiltration,

Fig. 2:    eine schematische Darstellung des ersten Ausführungsbeispiels in einem zweiten Betriebsmodus,

Fig. 3    eine Variante für das erste Ausführungsbeispiel,

Fig. 4    eine schematische Darstellung eines zweiten Ausführungsbeispiels einer erfindungsgemässen Vorrichtung zur Tangentialflussfiltration,

Fig. 5:    eine schematische Darstellung des zweiten Ausführungsbeispiels in dem zweiten Betriebsmodus,

Fig. 6:    eine perspektivische Darstellung eines elektromagnetischen Drehantriebs, der als Tempelmotor ausgestaltet ist,

Fig. 7:    eine Ausführungsform einer Zentrifugalpumpe mit einem berührungslos magnetisch lagerbaren Rotor in einem Schnitt in axialer Richtung, und

Fig. 8:    eine Ausgestaltung eines Vorratsbehälters in einer schematischen Darstellung.

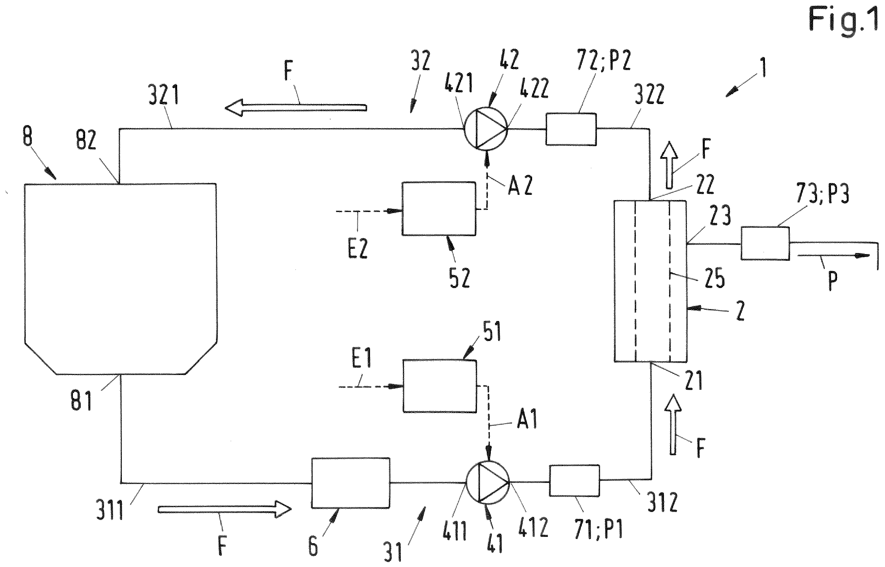

Fig. 1 zeigt in einer schematischen Darstellung ein erstes Ausführungsbeispiel einer erfindungsgemässen Vorrichtung zur Tangentialflussfiltration eines Fluids, die gesamthaft mit dem Bezugszeichen 1 bezeichnet ist. Das Fluid ist beispielsweise eine Suspension, aus welcher zumindest eine Komponente ausgefiltert werden soll. Dabei ist es möglich, dass die auszufilternde Komponente, die als Permeat abgeführt wird, das Zielprodukt ist, welches bei der Filtration gewonnen werden soll, beispielsweise ein Protein, oder dass durch das Ausfiltern des Permeat das als Retentat verbleibende Fluid das Zielprodukt ist, welches durch die Filtration aufkonzentriert werden soll, sodass beispielsweise die Konzentration einer oder mehrerer Komponenten des Fluids zunimmt.

Die Vorrichtung 1 zur Tangentialflussfiltration umfasst eine Filtereinrichtung 2, in welcher ein Filterelement 25 angeordnet ist, eine erste Strömungsverbindung 31, mit welcher die Filtereinrichtung 2 mit einem Vorratsbehälter 8 für das Fluid verbindbar ist, sowie eine zweite Strömungsverbindung 32, mit welcher die Filtereinrichtung 2 mit dem Vorratsbehälter 8 verbindbar ist.

Der Vorratsbehälter 8 kann beispielsweise auch ein Bioreaktor für ein Perfusionsverfahren zur kontinuierlichen Kultivierung von Zellen sein, wobei die Filtereinrichtung 2 zum Ausfiltern von Stoffwechselprodukten der Zellen oder zur Gewinnung zellfreier Medien verwendet wird, und die Zellen, bzw. die Suspension, welche die Zellen enthält, anschliessend wieder in den Bioreaktor zurückgeführt wird.

In der ersten Strömungsverbindung 31 ist eine erste Zentrifugalpumpe 41 für das Fluid angeordnet, welche einen Einlass 411 und einen Auslass 412 für das Fluid aufweist. Ferner ist eine erste Kontrolleinheit 51 zur Ansteuerung der ersten Zentrifugalpumpe 41 vorgesehen. Vorzugsweise umfasst die erste Kontrolleinheit 51 eine Regelung, mit welcher der Betrieb der ersten Zentrifugalpumpe 41 geregelt werden kann.

In der zweiten Strömungsverbindung 32 ist eine zweite Zentrifugalpumpe 42 für das Fluid angeordnet, welche einen Einlass 421 und einen Auslass 422 für das Fluid aufweist. Ferner ist eine zweite Kontrolleinheit 52 zur Ansteuerung der zweiten Zentrifugalpumpe 42 vorgesehen. Vorzugsweise umfasst die zweite Kontrolleinheit 52 eine Regelung, mit welcher der Betrieb der zweiten Zentrifugalpumpe 42 geregelt werden kann.

Dabei ist die zweite Zentrifugalpumpe 42 so angeordnet und wird so betrieben, dass sie entgegengesetzt zu der ersten Zentrifugalpumpe 41 arbeitet. Das heisst, dass der Auslass 412 der ersten Zentrifugalpumpe 41 über die Filtereinrichtung 2 mit dem Auslass 422 der zweiten Zentrifugalpumpe 42 verbunden ist. Sowohl der Auslass 412 der ersten Zentrifugalpumpe 41 als auch der Auslass 422 der zweiten Zentrifugalpumpe 42 sind jeweils mit der Filtereinrichtung 2 verbunden.

Die Strömung des Fluids und insbesondere die Richtung der Strömung ist in Fig. 1 durch die Pfeile mit dem Bezugszeichen F dargestellt.

Die Filtereinrichtung 2 umfasst eine erste Fluidöffnung 21 und eine zweite Fluidöffnung 22 für das Fluid sowie eine Permeatöffnung 23 zum Abführen des aus dem Fluid ausgefilterten Permeats, welches in Fig. 1 durch den Pfeil mit dem Bezugszeichen P angedeutet ist.

Bei der in Fig. 1 dargestellten Richtung der Strömung F dient die erste Fluidöffnung 21 als Einlass des Filtereinrichtung 2, durch welchen das Fluid in die Filtereinrichtung 2 einströmt, und die zweite Fluidöffnung 22 dient als Auslass, durch welchen das Retentat aus der Filtereinrichtung 2 ausströmt.

Die Filtereinrichtung 2 ist für eine Tangentialflussfiltration ausgestaltet, die auch als Querstromfiltration oder Cross-Flow-Filtration bezeichnet wird. Das heisst, dass das Fluid in der Filtereinrichtung 2 parallel zum Filterelement 25 geführt wird, sodass das Filterelement 25 von dem Fluid überströmt wird, und die Ausfilterung des Permeats senkrecht zur Strömungsrichtung des Fluids erfolgt.

Solche Filtereinrichtungen 2, welche für die Tangentialflussfiltration ausgestaltet sind, sind dem Fachmann aus dem Stand der Technik hinlänglich bekannt und bedürfen daher keiner weiteren Erläuterung.

Eine wesentliche Grösse bei der Tangentialflussfiltration ist die Druckdifferenz über das Filterelement 25, welche das Ausfiltern des Permeats antreibt. Wie dies allgemein üblich ist, wird auch im Rahmen dieser Anmeldung diese Druckdifferenz über das Filterelement 25 durch einen sogenannten Transmembrandruck (TMP) charakterisiert. Der Transmembrandruck (TMP) ist einer rechnerische Grösse, welche das arithmetische Mittel des Druckabfalls über das Filterelement 25 angibt.

Der Druck des Fluids an der ersten Fluidöffnung 21 wird als ein erster Druck P1 bezeichnet. Der Druck des Fluids an der zweiten Fluidöffnung 22 wird als ein zweiter Druck P2 bezeichnet Der Druck des Fluids an der Permeatöffnung 23 wird als ein dritter Druck P3 bezeichnet. Der Transmembrandruck TMP wird dann definiert als:

$$TMP = (P1+P2)/2 - P3$$

Der Transmembrandruck wird auch als transmembrane Druckdifferenz bezeichnet.

Die erste Strömungsverbindung 31 und die zweite Strömungsverbindung 32 werden vorzugsweise mit Leitungen realisiert, die als flexible Leitungen ausgestaltet sind, also als Leitungen, deren Wandung deformierbar ist. Jede Leitung ist beispielsweise als Schlauch, insbesondere als Kunststoffschlauch, ausgestaltet, der beispielsweise aus einem Silikonkautschuk , PVC (Polyvinylchlorid), PU (Polyurethan), PE (Polyethylen), HDPE (High Density Polyethylen), PP (Polypropylen), EVA (Ethyl Vinyl Acetat) oder Nylon besteht. Vorzugsweise ist jeder Schlauch, der zu der ersten 31 oder zu der zweiten Strömungsverbindung 32 gehört, für den Einmalgebrauch ausgestaltet. Bei der Ausgestaltung für den Einmalgebrauch werden diejenigen Komponenten, welche mit den zu behandelnden Substanzen in Kontakt kommen, hier also insbesondere die Schläuche, nur genau einmal verwendet und dann bei der nächsten Anwendung durch neue, das heisst ungebrauchte, Einmalteile ersetzt.

Die erste Strömungsverbindung 31 umfasst einen Zuführschlauch 311, welcher eine erste Öffnung 81 des Vorratsbehälters 8 mit dem Einlass 411 der ersten Zentrifugalpumpe 41 verbindet, sowie einen Einspeiseschlauch 312, welcher den Auslass 412 der ersten Zentrifugalpumpe 41 mit der ersten Fluidöffnung 21 der Filtereinrichtung 2 verbindet.

Ferner ist ein Durchflusssensor 6 zur Ermittlung des Durchflusses des Fluids durch die erste Strömungsverbindung 31 vorgesehen. Der Durchflusssensor 6 ist beispielsweise in oder an dem Zuführschlauch 311 der ersten Strömungsverbindung 31 vorgesehen, also zwischen dem Vorratsbehälter 8 und der ersten Zentrifugalpumpe 41. Insbesondere kann der Durchflusssensor 6 als sogenannter Clamp-on Sensor ausgestaltet sein, das heisst als ein Durchflusssensor 6, der auf den Zuführschlauch 311 aufgeklemmt wird, sodass der Zuführschlauch 311 in dem Messbereich des Durchflusssensors 6 eingeklemmt ist.

Die zweite Strömungsverbindung 32 umfasst einen Abführschlauch 322, welcher die zweite Fluidöffnung 22 der Filtereinrichtung 2 mit dem Auslass 422 der zweiten Zentrifugalpumpe 42 verbindet, und einen Rückführschlauch 321, welcher den Einlass 421 der zweiten Zentrifugalpumpe 42 mit einer zweiten Öffnung 82 des Vorratsbehälters 8 verbindet.

Somit sind sowohl der Auslass 412 der ersten Zentrifugalpumpe 41 als auch der Auslass 422 der zweiten Zentrifugalpumpe 42 jeweils mit der Filtereinrichtung 2 verbunden, nämlich der Auslass 412 der ersten Zentrifugalpumpe 41 mit der ersten Fluidöffnung 21 und der Auslass 422 der zweiten Zentrifugalpumpe 42 mit der zweiten Fluidöffnung 22 der Filtereinrichtung 2. Daher kann die zweite Zentrifugalpumpe 42 an der zweiten Fluidöffnung 22 einen Gegendruck erzeugen, sodass an der zweiten Fluidöffnung 22 der zweite Druck P2 eingestellt werden kann.

Im Betriebszustand dient die erste Zentrifugalpumpe 41 dazu, das Fluid durch die Filtereinrichtung 2 und über das Filterelement 25 zu bewegen. Die erste Zentrifugalpumpe 41 zirkuliert das Fluid aus dem Vorratsbehälter 8 durch die erste Strömungsverbindung 31, durch die Filtereinrichtung 2 und durch die zweite Strömungsverbindung 32 zurück in den Vorratsbehälter 8.

Im Betriebszustand dient die zweite Zentrifugalpumpe 42 dazu, an der zweiten Fluidöffnung 22 der Filtereinrichtung 2 einen Gegendruck zu generieren, das heisst, die zweite Zentrifugalpumpe 42 wird derart betrieben, dass sie den zweiten Druck P2, welcher an der zweiten Fluidöffnung 22 der Filtereinrichtung 2 herrscht, erhöht.

Vorzugsweise umfasst die Vorrichtung 1 ferner eine Mehrzahl von Drucksensoren 71, 72, 73, wobei die Drucksensoren 71, 72 und 73 so angeordnet und ausgestaltet sind, dass mit Ihnen der TMP über das Filterelement 25 ermittelbar ist.

Bei dem in Fig. 1 dargestellten Ausführungsbeispiel sind insgesamt drei Drucksensoren 71 vorgesehen, nämlich ein erster Drucksensor 71, mit welchem der erste Druck P1 des Fluids an der ersten Fluidöffnung 21 ermittelbar ist, ein zweiter Drucksensor 72, mit welchem der zweite Druck P2 des Fluids an der zweiten Fluidöffnung 22 ermittelbar ist, und ein dritter Drucksensor 73, mit welchem der dritte Druck P3 an der Permeatöffnung 23 ermittelbar ist.

Es versteht sich, dass auch Ausführungsformen der erfindungsgemässen Vorrichtung 1 möglich sind, bei denen nur einer der Drucksensoren 71, 72, 73 vorgesehen ist, also beispielsweise nur der erste Drucksensor 71 oder nur der zweite Drucksensor 72 oder nur der dritte Drucksensor 73. Ferner sind auch Ausführungsformen möglich bei denen genau zwei Drucksensoren vorgesehen sind, also nur der erste Drucksensor 71 und der zweite Drucksensor 72, oder nur der erste Drucksensor 71 und der dritte Drucksensor 73, oder nur der zweite Drucksensor 72 und der dritte Drucksensor 73.

Die Anzahl der Drucksensoren 71, 72, 73 und welche Drucksensoren 71, 72, 73 vorgesehen sind, richtet sich insbesondere nach der spezifischen Ausführung der Regelung oder der Steuerung, mit welcher das erfindungsgemässe Verfahren durchgeführt wird.

Bei dem ersten Ausführungsbeispiel, welches in Fig. 1 dargestellt ist, ist der erste Drucksensor 71 zwischen der ersten Zentrifugalpumpe 41 und der Filtereinrichtung 2 vorgesehen, nämlich in oder an dem Einspeiseschlauch 312. Der zweite Drucksensor 72 ist zwischen der Filtereinrichtung 2 und der zweiten Zentrifugalpumpe 42 vorgesehen, nämlich in oder an dem Abführschlauch 322. Der dritte Drucksensor 73 ist an oder stromabwärts der Permeatöffnung 23 angeordnet.

Das erfindungsgemässe Verfahren wird mit der erfindungsgemässen Vorrichtung 1 vorzugsweise so durchgeführt, dass eine der beiden Zentrifugalpumpen 41 oder 42 zum Einstellen bzw. zum Regeln eines Soll-Wertes für den Durchfluss verwendet wird, während die andere der beiden Zentrifugalpumpen 42 oder 41 zum Einstellen bzw. zum Regeln des Transmembrandrucks (TMP) auf einen Soll-Wert für den TMP verwendet wird.

Dabei ist es für das Einstellen der Soll-Werte für den Durchfluss und für den TMP bevorzugt, dass das jeweilige Einstellen von der ersten Kontrolleinheit 51 bzw. von der zweiten Kontrolleinheit 52 über einen Betriebsparameter der ersten Zentrifugalpumpe 41 bzw. der zweiten Zentrifugalpumpe 42 erfolgt. Besonders bevorzugt ist dabei der jeweilige Betriebsparameter die Drehzahl der ersten Zentrifugalpumpe 41 bzw. der zweiten Zentrifugalpumpe 42.

Im Folgenden werden einige Varianten für den Betrieb der Vorrichtung 1 beschrieben. Diesen Varianten ist es gemeinsam, dass die erste Kontrolleinheit 51 für die Flussregelung verwendet wird, also für das Einregeln des Durchflusses des Fluids durch die erste Strömungsverbindung 31 auf einen Soll-Wert für den Durchfluss. Die zweite Kontrolleinheit 52 wird für die Druckregelung verwendet, also für das Einregeln des Transmembrandrucks (TMP) auf einen Soll-Wert für den TMP oder für das Einregeln des ersten Drucks P1 oder des zweiten Drucks P2 oder des dritten Drucks P3 auf einen jeweiligen Soll-Wert. Die zweite Kontrolleinheit 52 wird also für eine Druckregelung eingesetzt.

Die beiden Kontrolleinheiten 51 und 52 können jeweils als autarke Kontrolleinheit 51, 52 ausgebildet sein. Dabei ist es nicht notwendig, aber möglich, dass die Kontrolleinheiten 51 und 52 Signale oder Informationen miteinander austauschen.

Die erste Kontrolleinheit 51 empfängt eine erste Eingangsgrösse E1, welche ein oder mehrere Messsignal(e) oder Ist-Werte(e) und/oder Soll-Werte umfassen kann, und ermittelt mit Hilfe der ersten Eingangsgrösse E1 eine erste Ausgangsgrösse A1, mit welcher die erste Zentrifugalpumpe 41 angesteuert wird, um den Soll-Wert für den Durchfluss einzuregeln bzw. zu halten. Die erste Ausgangsgrösse A1 umfasst insbesondere eine Information, mit welcher die Drehzahl der ersten Zentrifugalpumpe 41 einstellbar ist oder einen Wert für die Drehzahl der ersten Zentrifugalpumpe 41.

Die zweite Kontrolleinheit 52 empfängt eine zweite Eingangsgrösse E2, welche ein oder mehrere Messsignal(e) oder Ist-Werte(e) und/oder Soll-Werte umfassen kann, und ermittelt mit Hilfe der zweiten Eingangsgrösse E2 eine zweite Ausgangsgrösse A2, mit welcher die zweite Zentrifugalpumpe 42 angesteuert wird, um den Soll-Wert für den TMP oder für den ersten Druck P1 oder für den zweiten Druck P2 oder für den dritten Druck P3 einzuregeln bzw. zu halten. Die zweite Ausgangsgrösse A2 umfasst insbesondere eine Information, mit welcher die Drehzahl der zweiten Zentrifugalpumpe 52 einstellbar ist, oder einen Wert für die Drehzahl der zweiten Zentrifugalpumpe 42.

Gemäss einer ersten Variante umfasst die erste Eingangsgrösse E1 den Soll-Wert für den Durchfluss und den Ist-Wert für den Durchfluss, welcher mit Hilfe des Durchflusssensors 6 ermittelt wird. Mit der ersten Ausgangsgrösse A1 wird die Drehzahl der ersten Zentrifugalpumpe 41 so verändert, dass der Ist-Wert für den Durchfluss auf den Soll-Wert für den Durchfluss eingeregelt wird. Die zweite Eingangsgrösse E2 umfasst die Ist-Werte für den ersten Druck P1, den zweiten Druck P2 und den dritten Druck P3 sowie den Soll-Wert für den TMP. Mit der zweiten Ausgangsgrösse A2 wird die Drehzahl der zweiten Zentrifugalpumpe 42 so verändert, dass der Ist-Wert für den TMP auf den Soll-Wert für den TMP eingeregelt wird. Der Ist-Wert des TMP lässt sich beispielsweise aus den drei Drücken P1, P2, P3 ermitteln.

Gemäss einer weiteren Variante umfasst die erste Eingangsgrösse E1 den Soll-Wert für den Durchfluss und den Ist-Wert für den Durchfluss, welcher mit Hilfe des Durchflusssensors 6 ermittelt wird. Mit der ersten Ausgangsgrösse A1 wird die Drehzahl der ersten Zentrifugalpumpe 41 so verändert, dass der Ist-Wert für den Durchfluss auf den Soll-Wert für den Durchfluss eingeregelt wird. Die zweite Eingangsgrösse E2 umfasst nur einen Ist-Wert für einen der Drücke P1 oder P2 oder P3, also entweder den Ist-Werte für den ersten Druck P1, oder den Ist-Wert für den zweiten Druck P2, oder den Ist-Wert für den dritten Druck P3. Die zweite Eingangsgrösse E2 umfasst ferner den Soll-Wert für diesen Druck, also entweder den Soll-Wert für den ersten Druck P1, oder den Soll-Wert für den zweiten Druck P2 oder den Soll-Wert für den dritten Druck P3. Mit der zweiten Ausgangsgrösse A2 wird die Drehzahl der zweiten Zentrifugalpumpe 42 so verändert, dass der Ist-Wert für den Druck P1 oder P2 oder P3 auf den Soll-Wert für diesen Druck P1 oder P2 oder P3 eingeregelt wird. Bei dieser Variante sind sowohl die Flussregelung in der ersten Kontrolleinheit 51 als auch die Druckregelung in der zweiten Kontrolleinheit 52 vorzugsweise jeweils als Proportional-Integral (PI) Regelung ausgestaltet.

Je nach Anwendungsfall kann das Verfahren zur Tangentialflussfiltration als Batch Prozess durchgeführt werden, bei welchem das zu filtrierende Fluid, beispielsweise eine Suspension, mittels der ersten Zentrifugalpumpe 41 dem Vorratsbehälter 8 entnommen und durch die erste Strömungsverbindung 31, durch die Filtereinrichtung 2 mit dem darin angeordneten Filterelement 25 und durch die zweite Strömungsverbindung 32 zurück zum Vorratsbehälter 8 zirkuliert wird. Das Permeat, welches in der Filtereinrichtung 2 quer zur Strömungsrichtung durch das Filterelement 25 hindurchtritt, wird durch die Permeatöffnung 23 abgeführt bzw. entnommen. Dabei wird mit der zweiten Zentrifugalpumpe 42 ein Gegendruck erzeugt, um an der zweiten Fluidöffnung 22 den zweiten Druck P2 einzustellen. Die erste Kontrolleinheit 51 regelt über die erste Zentrifugalpumpe 41, vorzugsweise über die Drehzahl der ersten Zentrifugalpumpe 41, den Durchfluss des Fluids auf einen Soll-Wert für den Durchfluss. Die zweite Kontrolleinheit 52 regelt über die zweite Zentrifugalpumpe 42, vorzugsweise über die Drehzahl der zweiten Zentrifugalpumpe 42, einen Druck, vorzugsweise den TMP oder den ersten Druck P1 oder den zweite Druck P2 oder den dritten Druck P3 auf einen Soll-Wert für diesen Druck.

Es ist aber auch möglich, das Verfahren zur Tangentialflussfiltration als kontinuierliches Verfahren durchzuführen, beispielsweise in einer Anwendung mit einem Perfusions-Bioreaktor zur kontinuierlichen Entnahme von Stoffwechselprodukten.

Gemäss einer ersten Variante für die Durchführung des Verfahrens wird das Fluid während des gesamten Filtrationsprozesses, also beispielsweise während des gesamten Batch Prozesses oder während des gesamten kontinuierlichen Prozesses, immer in dergleichen Richtung durch die Vorrichtung 1 zirkuliert.

Gemäss einer anderen Variante für die Durchführung des erfindungsgemässen Verfahrens wird die Tangentialflussfiltration in einem alternierenden Modus durchgeführt. Der alternierende Modus umfasst einen ersten Betriebsmodus in welchem das Fluid, beispielsweise wir vorangehend beschrieben, von der ersten Fluidöffnung 21 zur zweiten Fluidöffnung 22 durch die Filtereinrichtung 2 strömt, sowie einen zweiten Betriebsmodus, in welchem die Strömungsrichtung des Fluids umgekehrt wird, sodass das Fluid im zweiten Betriebsmodus von der zweiten Fluidöffnung 22 zur ersten Fluidöffnung 21 der Filtereinrichtung 2 strömt.

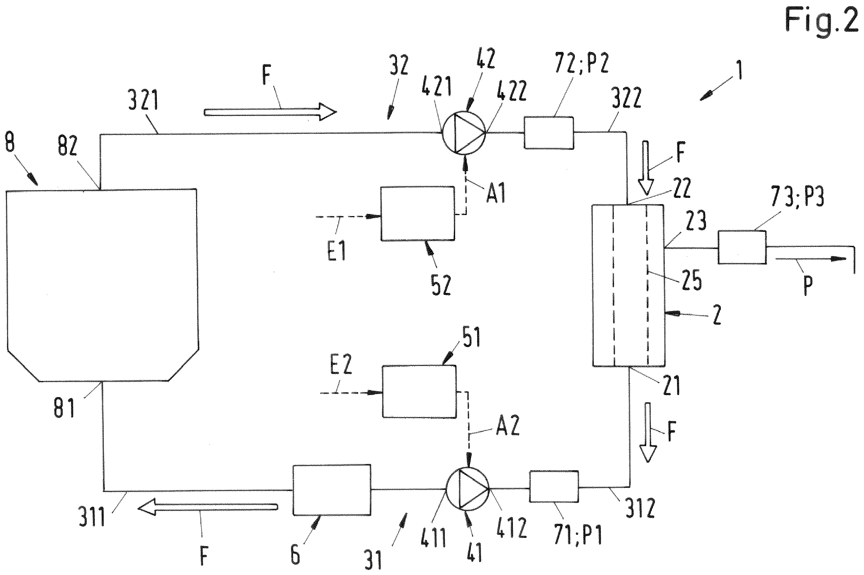

Der zweite Betriebsmodus ist in Fig. 2 in einer schematischen Darstellung des ersten Ausführungsbeispiels der Vorrichtung 1 veranschaulicht, wobei Fig. 2 ansonsten der Fig. 1 entspricht.

Das Wechseln von dem ersten Betriebsmodus in den zweiten Betriebsmodus lässt sich in einfacher Weise durch das Ansteuern der beiden Zentrifugalpumpen 41, 42 realisieren. So werden beispielsweise im zweiten Betriebsmodus die beiden Zentrifugalpumpen 41, 42 so angesteuert, dass der von der zweiten Zentrifugalpumpe 42 generierte Gegendruck so gross ist, dass der zweite Druck P2 an der zweiten Fluidöffnung 22 der Filtereinrichtung 2 grösser ist als der von der ersten Zentrifugalpumpe 41 generierte erste Druck P1 am ersten Fluideingang 21 der Filtereinrichtung 2.

Im zweiten Betriebsmodus werden vorzugsweise die Funktionen der ersten Kontrolleinrichtung 51 und der zweiten Kontrolleinrichtung 52 im Vergleich zum ersten Betriebsmodus vertauscht. Im zweiten Betriebsmodus wird also vorzugsweise die zweite Kontrolleinheit 52 für die Flussregelung verwendet, also für das Einregeln des Durchflusses des Fluids auf einen Soll-Wert für den Durchfluss. Die erste Kontrolleinheit 51 wird für die Druckregelung verwendet, also für das Einregeln des Transmembrandrucks (TMP) auf einen Soll-Wert für den TMP oder für das Einregeln des ersten Drucks P1 oder des zweiten Drucks P2 oder des dritten Drucks P3 auf einen jeweiligen Soll-Wert. Die erste Kontrolleinheit 51 wird nun also für eine Druckregelung eingesetzt.

Dementsprechend empfängt im zweiten Betriebsmodus die zweite Kontrolleinheit 52 die erste Eingangsgrösse E1, welche wie vorangehend beschrieben ein oder mehrere Messsignal(e) oder Ist-Werte(e) und/oder Soll-Werte umfassen kann, und ermittelt mit Hilfe der ersten Eingangsgrösse E1 die erste Ausgangsgrösse A1, mit welcher die zweite Zentrifugalpumpe 42 angesteuert wird, um den Soll-Wert für den Durchfluss einzuregeln bzw. zu halten.

Die erste Kontrolleinheit 51 empfängt die zweite Eingangsgrösse E2, welche wie vorangehend beschrieben ein oder mehrere Messsignal(e) oder Ist-Werte(e) und/oder Soll-Werte umfassen kann, und ermittelt mit Hilfe der zweiten Eingangsgrösse E2 die zweite Ausgangsgrösse A2, mit welcher die erste Zentrifugalpumpe 41 angesteuert wird, um den Soll-Wert für den TMP oder für den ersten Druck P1 oder für den zweiten Druck P2 oder für den dritten Druck P3 einzuregeln bzw. zu halten.

Die Durchführung des Verfahrens zur Tangentialflussfiltration im alternierenden Modus hat den Vorteil, dass das Filterelement 25 wechselweise in entgegengesetzten Richtungen überströmt wird, wodurch sich Ablagerungen auf dem Filterelement 25 bzw. der Aufbau eines unerwünschten Filterkuchens auf dem Filterelement 25 für viele Anwendungen effizienter vermeiden lassen. Auch ist es möglich, durch die Umkehrung der Strömungsrichtung bereits entstandene Ablagerungen am oder im Filterelement 25 wieder - zumindest teilweise - zu entfernen.

Durch diese Massnahme der Umkehrung der Strömungsrichtung kann sich auch ein Verstopfen oder ein teilweises Zusetzen des Filterelements 25 verhindern oder zumindest reduzieren lassen, wodurch die Permeabilität des Filterelements erhalten bleibt und damit, beispielsweise im Vergleich zum Betrieb mit nur einer Strömungsrichtung, die Ausbeute an Permeat erhöht werden kann. Ferner ist es möglich, die Filtereinrichtung 2 bzw. das Filterelement 25 über einen längeren Zeitraum zu verwenden, im Vergleich zum Betrieb mit nur einer Strömungsrichtung.

Im alternierenden Modus wird vorzugsweise nach einem vorgebbaren Zeitschema zwischen dem ersten Betriebsmodus und dem zweiten Betriebsmodus gewechselt.

Der Differenzdruck der beiden von der ersten Zentrifugalpumpe 41 und der zweiten Zentrifugalpumpe 42 generierten Drücke, und damit die Differenz zwischen dem ersten Druck P1 und dem zweiten Druck P2, die ja die Strömungsrichtung des Fluids durch die Filtereinrichtung 2 bestimmt, ist für jeden Betriebsmodus unabhängig einstellbar. Insbesondere kann für den Betrieb im ersten Betriebsmodus auch betragsmässig ein anderer Wert für die Differenz aus dem ersten Druck P1 und dem zweiten Druck P2 eingestellt werden als im zweiten Betriebsmodus. Ferner ist es beispielsweise möglich, im ersten Betriebsmodus einen anderen Transmembrandruck (TMP) einzustellen bzw. einzuregeln als im zweiten Betriebsmodus. Auch ist es möglich, im ersten Betriebsmodus einen anderen Durchfluss des Fluids einzustellen bzw. einzuregeln als im zweiten Betriebsmodus,

Die Anzahl der Wechsel bzw. die Frequenz der Wechsel zwischen dem ersten Betriebsmodus und dem zweiten Betriebsmodus ist auch frei einstellbar und kann für den jeweiligen Anwendungsfall optimiert werden.

Auch der prozentuale Anteil der ersten Betriebsmodus bzw. des zweiten Betriebsmodus am gesamten Prozess der Tangentialstromfiltration kann frei gewählt werden. Es ist z. B. möglich, den ersten Betriebsmodus und den zweiten Betriebsmodus in einem Verhältnis von 50% zu 50% durchzuführen, also mit gleichen Anteilen, aber selbstverständlich sind auch andere Verhältnisse wie beispielsweise 75% zu 25% oder sogar 99% zu 1% möglich. Die Wahl eines geeigneten Verhältnisses kann in Abhängigkeit vom jeweiligen Anwendungsfall ausgewählt oder für den jeweiligen Anwendungsfall optimiert werden.

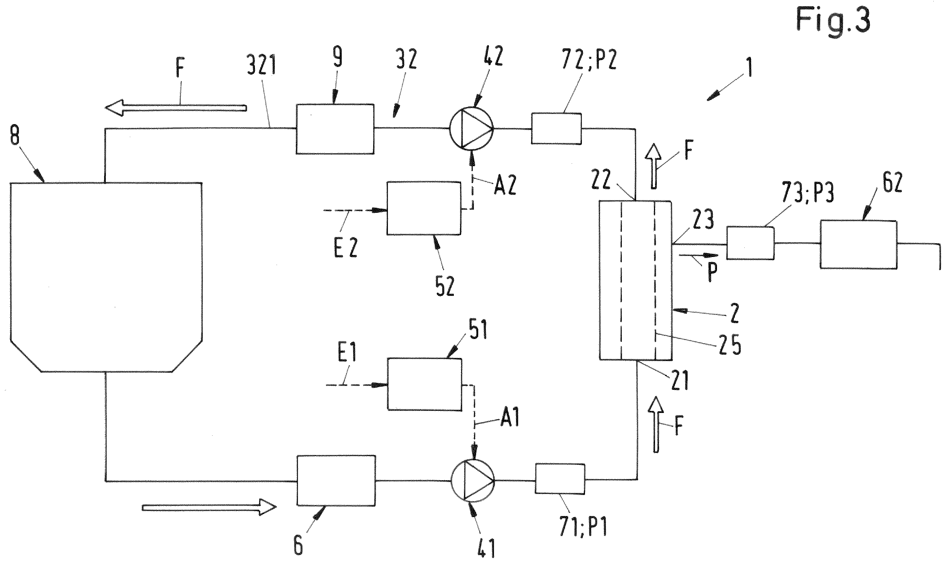

Fig. 3 zeigt in einer zu Fig. 1 analogen Darstellung eine Variante für das erste Ausführungsbeispiel der erfindungsgemässen Vorrichtung.

Bei dieser Variante der Vorrichtung 1 ist ferner noch ein Viskositätssensor 9 vorgesehen, welcher beispielsweise in der zweiten Strömungsverbindung 32 angeordnet ist, und mit welchem die Viskosität des Fluids ermittelt werden kann. Vorzugsweise ist der Viskositätssensor 9 für eine Inline Messung der Viskosität des Fluids ausgestaltet. Der Viskositätssensor ist vorzugsweise in oder an dem Rückführschlauch 321 der zweiten Strömungsverbindung 32 angeordnet. Mit Hilfe des Viskositätssensors 9 kann beispielsweise der Fortschritt der Aufkonzentration des Fluids ermittelt werden, insbesondere bei solchen Anwendungen, bei welchen das Ausfiltern des Permeats aus dem Fluid zu einer Änderung der Viskosität des Fluids führt.

Ferner ist bei der in Fig. 3 dargestellten Variante noch ein zweiter Durchflusssensor 62 vorgesehen, welcher stromabwärts der Permeatöffnung 23 und beispielsweise auch stromabwärts des dritten Drucksensors 73 angeordnet ist. Mit dem zweiten Durchflusssensor 62 lässt sich der Fluss des mittels des Filterelements 25 aus dem Fluid ausgefilterten Permeats ermitteln und damit beispielsweise die Menge (Stoffmenge oder Volumen oder Masse) des Permeats. Hieraus lassen sich Informationen über die Effizienz der Tangentialstromfiltration gewinnen.

Bei einigen Ausgestaltungen sind sowohl der Viskositätssensor 9 als auch der zweite Durchflusssensor 62 vorgesehen. Bei anderen Ausgestaltungen ist nur eines der beiden Elemente, nämlich entweder nur der Viskositätssensor 9 oder nur der zweite Durchflusssensor 62 vorgesehen.

Ferner ist es möglich, anstelle der Verwendung eines Viskositätssensors z. B. die Proteinkonzentration mittels eines Inline Refraktometers oder eines Inline-Photospektrometers zu bestimmen. Da solche Instrumente sehr teuer sind, ist es jedoch wichtig, dass diese Geräte wiederverwendbar sind, ohne dass sie vor jedem Einsatz gereinigt und sterilisiert werden müssen. Das lässt sich beispielsweise dadurch erreichen, dass in den jeweiligen Schlauch ein Teil aus transparentem Kunststoff, beispielsweise aus Polycarbonat eingefügt wird, durch welches das Licht des Refraktometers oder des Photospektrometers geführt werden kann. Vorteilhaft ist dabei, dass das eingefügte Teil nicht rund, sondern mit flachen Wänden ausgeführt ist, beispielsweise rechteckig, sechseckig oder achteckig.

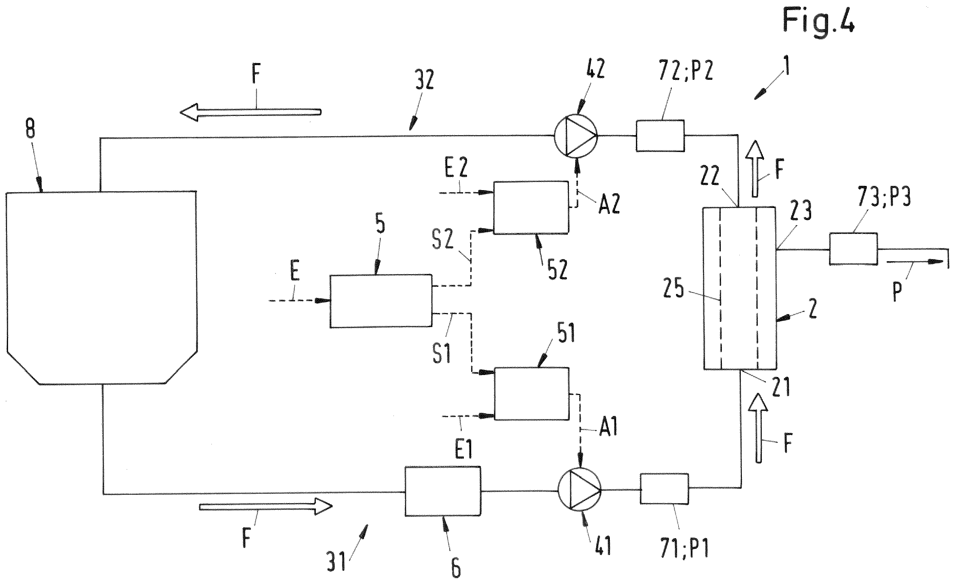

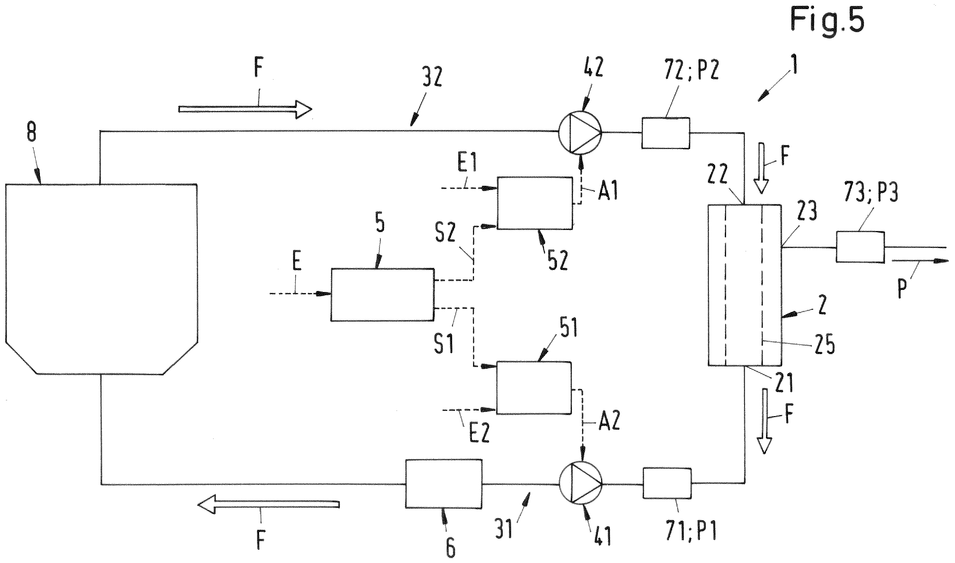

In den Fig. 4 und Fig. 5 ist in jeweils schematischer Darstellung ein zweites Ausführungsbeispiel einer erfindungsgemässen Vorrichtung 1 zur Tangentialflussfiltration gezeigt, wobei Fig. 4 das zweite Ausführungsbeispiel im ersten Betriebsmodus zeigt und Fig. 5 im zweiten Betriebsmodus.

Bei der folgenden Beschreibung des zweiten Ausführungsbeispiels wird nur auf die Unterschiede zu dem ersten Ausführungsbeispiel näher eingegangen. Gleiche Teile oder von der Funktion her gleichwertige Teile des zweiten Ausführungsbeispiels sind mit den gleichen Bezugszeichen bezeichnet wie bei dem ersten Ausführungsbeispiel bzw. seinen Varianten. Insbesondere haben die Bezugszeichen die gleiche Bedeutung wie sie bereits im Zusammenhang mit dem ersten Ausführungsbeispielen erläutert sind. Es versteht sich, dass alle vorangehenden Erläuterungen des ersten Ausführungsbeispiels und seiner Varianten in gleicher Weise oder in sinngemäss gleicher Weise auch für das zweite Ausführungsbeispiel gelten.

Bei dem zweiten Ausführungsbeispiel umfasst die Vorrichtung 1 zusätzlich eine zentrale Kontrolleinheit 5, welche mit der ersten Kontrolleinheit 51 und mit der zweiten Kontrolleinheit 52 signalverbunden ist, wobei die zentrale Kontrolleinheit 5 zur Ansteuerung der ersten Kontrolleinheit 51 und zur Ansteuerung der zweiten Kontrolleinheit 52 ausgestaltet ist.

Das zweite Ausführungsbeispiel der Vorrichtung 1 ist insbesondere vorteilhaft, für die Ausgestaltung des Verfahrens, bei welchem die Tangentialflussfiltration in dem alternierenden Modus durchgeführt wird. Selbstverständlich ist das zweite Ausführungsbeispiel der Vorrichtung 1 nicht auf die Verwendung bei der Tangentialflussfiltration im alternierenden Modus beschränkt, sondern kann auch für solche Ausgestaltungen des erfindungsgemässen Verfahrens verwendet werden, bei welchen keine Umkehrung der Strömungsrichtung während der Tangentialflussfiltration stattfindet.

Bei der in Fig. 4 und Fig. 5 dargestellten Ausführungsform ist das zweite Ausführungsbeispiels der Vorrichtung 1 insbesondere für den Betrieb im alternierenden Modus ausgestaltet.

Die zentrale Kontrolleinheit 5 erhält eine Eingangsgrösse E, welche insbesondere mehrere Soll-Werte umfasst. Die Eingangsgrösse E für die zentrale Kontrolleinheit 5 umfasst beispielsweise einen oder mehrere der folgenden Soll-Werte: den Soll-Wert für den ersten Druck P1, den Soll-Wert für den zweiten Druck P2, den Soll-Wert für den dritten Druck P3, den Soll-Wert für den Transmembrandruck TMP, den Soll-Wert für den Durchfluss des Fluids, den Soll-Wert für die Frequenz des Wechsels zwischen dem ersten Betriebsmodus und dem zweiten Betriebsmodus, den Soll-Wert für die relative Einschaltdauer (duty cycle) des ersten bzw. des zweiten Betriebsmodus, d.h. den prozentualen Anteil des ersten bzw. des zweiten Betriebsmodus an der Tangentialflussfiltration. Es versteht sich, dass einige Soll-Werte, z. B. die Soll-Werte für die Drücke P1, P2, P2 oder den TMP oder der Soll-Wert für den Durchfluss für den ersten Betriebsmodus unterschiedliche Werte haben können (aber nicht müssen) wie für den zweiten Betriebsmodus.

Aus der Eingangsgrösse E generiert die zentrale Kontrolleinheit 5 ein erstes Steuersignal S1 zur Ansteuerung der ersten Kontrolleinheit 51 sowie ein zweites Steuersignal S2 zur Ansteuerung der zweiten Kontrolleinheit 52. Das erste Steuersignal S1 wird der ersten Kontrolleinheit 51 übermittelt und das zweite Kontrollsignal S2 wird der zweiten Kontrolleinheit 52 übermittelt

Die erste Kontrolleinheit 51 empfängt im ersten Betriebsmodus zusätzlich zu dem ersten Steuersignal S1 die Eingangsgrösse E1, welche insbesondere einen oder mehrere der folgenden Ist-Werte umfasst: den Ist-Wert für den Durchfluss des Fluids, den Ist-Wert für den ersten Druck P1, den Ist-Wert für den zweiten Druck P2, den Ist-Wert für den dritten Druck P3. Die erste Kontrolleinheit 51 ermittelt mit Hilfe des ersten Steuersignals S1und mit Hilfe der ersten Eingangsgrösse E1 die erste Ausgangsgrösse A1, mit welcher die erste Zentrifugalpumpe 41 angesteuert wird.

Die zweite Kontrolleinheit 52 empfängt im ersten Betriebsmodus zusätzlich zu dem zweiten Steuersignal S2 die Eingangsgrösse E2, welche insbesondere einen oder mehrere der folgenden Ist-Werte umfasst: den Ist-Wert für den Durchfluss des Fluids, den Ist-Wert für den ersten Druck P1, den Ist-Wert für den zweiten Druck P2, den Ist-Wert für den dritten Druck P3. Die zweite Kontrolleinheit 52 ermittelt mit Hilfe des zweiten Steuersignals S2 und mit Hilfe der zweiten Eingangsgrösse E1 die zweite Ausgangsgrösse A2, mit welcher die zweite Zentrifugalpumpe 42 angesteuert wird.

Es versteht sich, dass in sinngemäss gleicher Weise wie bei dem ersten Ausführungsbeispiels die erste Kontrolleinheit 51 im zweiten Betriebsmodus (Fig. 5) die Eingangsgrösse E2 erhalten kann und die zweite Kontrolleinheit 52 die Eingangsgrösse E1.

Bei der in Fig. 4 und Fig. 5 dargestellten Ausführungsform sind die Informationen, welche die erste Kontrolleinheit 51 als Eingangsgrösse E1 empfängt, identisch mit den Informationen, welche die zweite Kontrolleinheit als Eingangsgrösse E2 enthält, sodass für den alternierenden Betriebsmodus die erste Kontrolleinheit 51 und die zweite Kontrolleinheit 52 alle Informationen zur Verfügungen haben, um je nach gewünschter Strömungsrichtung des Fluids als Flussregelung oder als Druckregelung zu fungieren. Anhand der Steuersignale S1 bzw. S2 können die erste Kontrolleinheit 51 bzw. die zweite Kontrolleinheit 52 erkennen, ob sie aktuell als Flussregelung oder als Druckregelung arbeiten sollen, und wann ein Wechsel von dem ersten Betriebsmodus in den zweiten Betriebsmodus und umgekehrt stattfinden soll. Durch die Regelung beider Zentrifugalpumpen 41, 42 ist es möglich, gleichzeitig eine Druckregelung und eine Flussregelung zu realisieren.

Als erste Zentrifugalpumpe 41 und als zweite Zentrifugalpumpe 42 sind prinzipiell alle Typen von Zentrifugalpumpen geeignet, mit welchen das Fluid durch die Filtereinrichtung 2 bewegt werden kann.

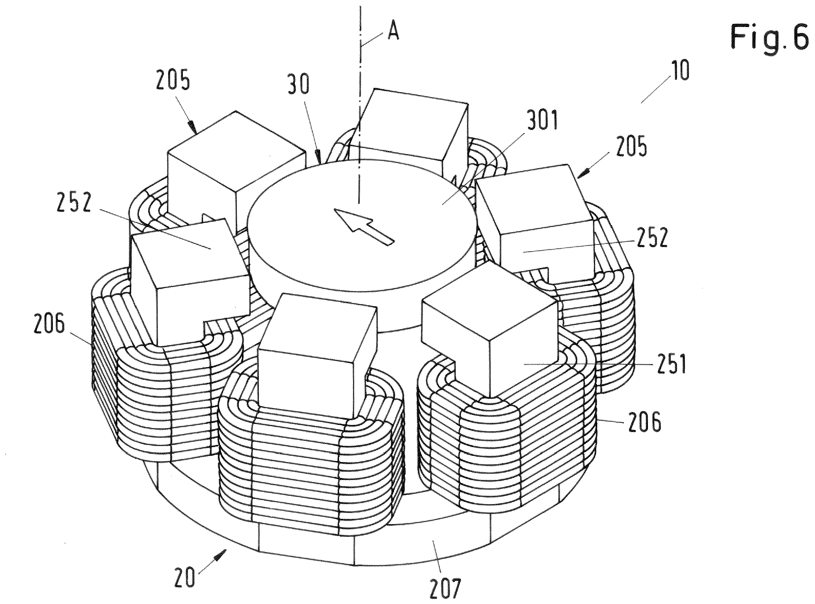

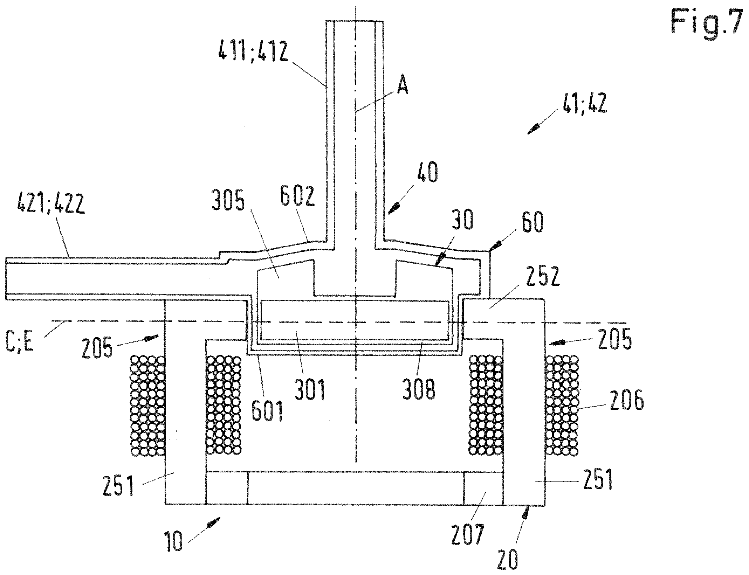

Im Folgenden wird anhand der Fig. 6 und der Fig. 7 ein Typ von Zentrifugalpumpe beschrieben, der speziell bevorzugt ist für die erste Zentrifugalpumpe 41 oder für die zweite Zentrifugalpumpe 42 und vorzugsweise sowohl für die erste und die zweite Zentrifugalpumpe 41 und 42.

Da vorzugsweise sowohl die erste Zentrifugalpumpe 41 als auch die zweite Zentrifugalpumpe 42 gemäss der in Fig. 6 und Fig. 7 veranschaulichten Ausführungsform ausgestaltet sind, wird in der folgenden Beschreibung sprachlich nicht mehr zwischen der ersten Zentrifugalpumpe 41 und der zweiten Zentrifugalpumpe 42 unterschieden, sondern auf die Zentrifugalpumpe 41, 42 Bezug genommen, wobei die Erläuterungen dann in gleicher Weise für die erste Zentrifugalpumpe 41 und für die zweite Zentrifugalpumpe 42 gelten.

Besonders bevorzugt, aber nicht notwendigerweise sind der erste Zentrifugalpumpe 41 und die zweite Zentrifugalpumpe 42, zumindest im Wesentlichen, identisch ausgestaltet.

Die im Folgenden beschriebenen Zentrifugalpumpe 41, 42 umfasst einen Rotor 30 zum Fördern des Fluids, sowie einen Stator 20, der mit dem Rotor 30 einen elektromagnetischen Drehantrieb 10 zum Rotieren des Rotors 30 um eine axiale Richtung A bildet, wobei der Rotor 30 einen magnetisch wirksamen Kern 301 umfasst, sowie eine Mehrzahl von Flügeln 305 (Fig. 7) zum Fördern des Fluids, wobei der Stator 20 als Lager- und Antriebsstator ausgestaltet ist, mit welchem der Rotor 30 berührungslos magnetisch antreibbar und berührungslos magnetisch bezüglich des Stators 20 lagerbar ist.

Ein besonderer Vorteil dieser Ausgestaltung der Zentrifugalpumpe 41, 42 ist es, dass der Rotor 30 als Integralrotor ausgestaltet ist, weil er sowohl der Rotor 30 des elektromagnetischen Drehantriebs 10 ist, als auch der Rotor 30 der Zentrifugalpumpe 41, 42, mit welchem das Fluid gefördert wird. Insgesamt erfüllt der Rotor 30 somit drei Funktionen in einem: Er ist der Rotor 30 des elektromagnetischen Antriebs 10, er ist der Rotor 30 der magnetischen Lagerung, und er ist das Laufrad, mit welchem auf das Fluid eingewirkt wird. Diese Ausgestaltung als Integralrotor bietet den Vorteil einer sehr kompakten und platzsparenden Ausgestaltung.

Ein weiterer Vorteil ist die berührungslose magnetische Lagerung des Rotors 30 bezüglich des Stators 20, welche aufgrund der Abwesenheit von mechanischen Lagern für den Rotor 30 sicherstellt, dass keine Verunreinigungen, wie sie beispielsweise in mechanischen Lagern auftreten können, in das Fluid eindringen. Zudem ist aufgrund der Abwesenheit mechanischer Lager und der in diesen auftretenden Reibungskräfte der Zusammenhang zwischen den elektrischen Betriebsgössen, wie beispielsweise Antriebsstrom oder Antriebsspannung, und der Drehzahl des Rotors 30 wesentlich genauer definiert, wodurch sich die Regelung der Zentrifugalpumpe 41, 42 verbessert bzw. vereinfacht.

Fig. 6 zeigt eine perspektivische Darstellung einer Ausführungsform des elektromagnetischen Drehantriebs 10, der als sogenannter Tempelmotor und nach dem Prinzip des lagerlosen Motors ausgestaltet ist. Fig. 7 zeigt eine Ausführungsform der Zentrifugalpumpe 41, 42 mit dem berührungslos magnetisch lagerbaren Rotor 30 in einem Schnitt in axialer Richtung.

Der elektromagnetische Drehantriebe 10 ist nach dem Prinzip des lagerlosen Motors ausgestaltet und wird nach diesem Prinzip betrieben. Mit dem Begriff lagerloser Motor ist dabei ein elektromagnetischer Drehantrieb 10 gemeint, bei welchem der Rotor 30 vollkommen magnetisch bezüglich des Stators 20 gelagert ist, wobei keine separaten magnetischen Lager vorgesehen sind. Der Stator 20 ist dazu als Lager- und Antriebsstator ausgestaltet, der sowohl Stator 20 des elektrischen Antriebs als auch Stator der magnetischen Lagerung ist. Der Stator 20 umfasst elektrische Wicklungen 206, mit denen sich ein magnetisches Drehfeld erzeugen lässt, welches zum einen ein Drehmoment auf den Rotor 30 ausübt, das dessen Rotation um eine Solldrehachse bewirkt, die eine axiale Richtung A festlegt, und welches zum anderen eine beliebig einstellbare Querkraft auf den Rotor 30 ausübt, sodass dessen radiale Position aktiv steuerbar bzw. regelbar ist. Somit sind drei Freiheitsgrade des Rotors 30 aktiv regelbar, nämlich seine Rotation sowie seine radiale Position (zwei Freiheitsgrade). Bezüglich dreier weiterer Freiheitsgrade, nämlich seiner Position in axialer Richtung A und Verkippungen bezüglich der zur Solldrehachse senkrechten radialen Ebene (zwei Freiheitsgrade), ist der Rotor 30 passiv magnetisch, das heisst nicht ansteuerbar, vorzugsweise durch Reluktanzkräfte gelagert bzw. stabilisiert. Das Nichtvorhandensein eines separaten magnetischen Lagers bei vollständiger magnetischer Lagerung des Rotors 30 ist die Eigenschaft, welcher der lagerlose Motor seinen Namen verdankt. In dem Lager- und Antriebsstator lässt sich die Lagerfunktion nicht von der Antriebsfunktion separieren.

Die Solldrehachse bezeichnet dabei diejenige Achse, um welche sich der Rotor 30 im Betriebszustand dreht, wenn sich der Rotor 30 bezüglich des Stators 20 in einer zentrierten und unverkippten Lage befindet, so wie dies in Fig. 6 und Fig. 7 dargestellt ist. Diese Solldrehachse definiert die axiale Richtung A. Üblicherweise stimmt die die axiale Richtung A festlegende Solldrehachse mit der Mittelachse des Stators 20 überein.

Im Folgenden wird mit einer radialen Richtung eine Richtung bezeichnet, welche senkrecht auf der axialen Richtung A steht.

Der Rotor 30 umfasst den magnetisch wirksamen Kern 301, welcher ring- oder scheibenförmig ausgestaltet ist. Der magnetisch wirksame Kern 301 ist gemäss der Darstellung in Fig. 6 als permanentmagnetische Scheibe ausgestaltet und definiert eine magnetische Mittelebene C (Fig. 7). Mit der magnetischen Mittelebene C des magnetisch wirksamen Kerns 301 des Rotors 30 wird diejenige Ebene senkrecht zur axialen Richtung A bezeichnet, in welcher der magnetisch wirksame Kern 301 des Rotors 30 im Betriebszustand gelagert wird, wenn der Rotor 30 nicht verkippt und in axialer Richtung A nicht ausgelenkt ist. In der Regel ist bei einem scheibenförmigen oder ringförmigen magnetisch wirksamen Kern 301 die magnetische Mittelebene C die geometrische Mittelebene des magnetisch wirksamen Kerns 301 des Rotors 30, die senkrecht zur axialen Richtung A liegt. Diejenige Ebene, in welcher der magnetisch wirksame Kern 301 des Rotors 30 im Betriebszustand im Stator 20 gelagert ist, wird auch als radiale Ebene E bezeichnet. Die radiale Ebene definiert die x-y-Ebene eines kartesischen Koordinatensystems, dessen z-Achse in axialer Richtung A verläuft. Ist der magnetisch wirksame Kern 301 des Rotors 30 nicht verkippt und bezüglich der axialen Richtung (A) nicht ausgelenkt, so stimmt die radiale Ebene E mit der magnetischen Mittelebene C überein.

Mit der radialen Position des magnetisch wirksamen Kerns 301 bzw. des Rotors 30 wird die Lage des Rotors 30 in der radialen Ebene E bezeichnet.

Mit dem "magnetisch wirksamen Kern 301" des Rotors 30 ist derjenige Bereich des Rotors 30 gemeint, welcher für die Drehmomentbildung sowie für die Erzeugung der magnetischen Lagerkräfte magnetisch mit dem Stator 20 zusammenwirkt.

Der elektromagnetische Drehantrieb 10 ist als Tempelmotor ausgestaltet und umfasst den Stator 20, welcher eine Mehrzahl von Spulenkernen 205 - hier sechs Spulenkerne 205 - aufweist, von denen jeder einen Längsschenkel 251 umfasst, welcher sich in axialer Richtung A erstreckt, sowie einen senkrecht zum Längsschenkel 251 angeordneten Querschenkel 252, welcher sich in radialer Richtung erstreckt und durch eine Stirnfläche begrenzt wird. Die Spulenkerne 205 sind äquidistant auf einer Kreislinie angeordnet, sodass die Stirnflächen der Querschenkel 252 den magnetisch wirksamen Kern 301 des Rotors 30 umgeben. An jedem Längsschenkel 251 ist eine konzentrierte Wicklung 206 angeordnet, welche den jeweiligen Längsschenkel 252 umgibt.

Die zueinander parallel ausgerichteten Längsschenkel 251 der Spulenkerne 205, die sich alle parallel zur axialen Richtung A erstrecken, und welche den Rotor 30 umgeben (oder bei einer Ausgestaltung als Aussenläufer von dem Rotor 30 umgeben werden), sind es, welche dem Tempelmotor seinen Namen gegeben haben, weil diese parallelen Längsschenkel 251 an die Säulen eines Tempels erinnern.

In Fig. 6 ist von dem Rotor 30 nur der magnetisch wirksame Kern 301 dargestellt. Es versteht sich, dass der Rotor 30 natürlich auch noch weitere Komponenten umfassen kann wie beispielsweise Ummantelungen oder Kapselungen, die vorzugsweise aus einem Kunststoff hergestellt sind, oder aus einem Metall oder aus einer Metalllegierung oder aus einer Keramik bzw. einem keramischen Werkstoff. Ferner umfasst der Rotor 30 auch die Flügel 305 zum Pumpen des Fluids (siehe Fig. 7). Der Rotor 30 kann auch noch sonstige Komponenten umfassen.

Diejenigen Enden der Längsschenkel 251, welche den Querschenkeln 252 abgewandt sind - in Fig. 6 und Fig. 7 sind dies die darstellungsgemäss unteren Enden - sind durch einen Rückschluss 207 miteinander verbunden. Der Rückschluss 207 ist vorzugsweise ringförmig ausgestaltet oder umfasst mehrere Segmente, welche die Längsschenkel 251 miteinander verbinden. Sowohl der Rückschluss 207 als auch die Spulenkerne 205 des Stators 20 sind jeweils aus einem weichmagnetischen Material gefertigt, weil sie als Flussleitelemente zur Führung des magnetischen Flusses dienen. Geeignete weichmagnetische Materialien für die Spulenkerne 205 und den Rückschluss 207 sind beispielsweise ferromagnetische oder ferrimagnetische Materialien, also insbesondere Eisen, Nickel-Eisen, Kobalt-Eisen Silizium-Eisen oder Mu-Metall. Hierbei ist für den Stator 20 eine Ausgestaltung als Statorblechpaket bevorzugt, bei welcher die Spulenkerne 205 und der Rückschluss 207 geblecht ausgestaltet sind, das heisst sie bestehen aus mehreren dünnen Blechelementen, die gestapelt sind.

Um die für den magnetischen Antrieb und die magnetische Lagerung des Rotors 30 notwendigen elektromagnetischen Drehfelder zu erzeugen, tragen die Längsschenkel 251 der Spulenkerne 205 die als konzentrierte Wicklungen 206 ausgestalteten Wicklungen, wobei bei der hier beschriebenen Ausführungsform um jeden Längsschenkel 251 herum jeweils genau eine konzentrierte Wicklung 206 angeordnet ist. Mit diesen konzentrierten Wicklungen 206 werden im Betriebszustand diejenigen elektromagnetischen Drehfelder erzeugt, mit welchen ein Drehmoment auf den Rotor 30 bewirkt wird, und mit welchen eine beliebig einstellbare Querkraft in radialer Richtung auf den Rotor 30 ausübbar ist, sodass die radiale Position des Rotors 30, also seine Position in der zur axialen Richtung A senkrechten radialen Ebene E, aktiv steuerbar bzw. regelbar ist. Natürlich sind auch solche Ausgestaltungen möglich, bei denen jeder Längsschenkel 251 mehr als eine konzentrierte Wicklung 206 aufweist, beispielsweise genau zwei konzentrierte Wicklungen.

Wie bereits erwähnt, ist der magnetisch wirksame Kern 301 permanentmagnetisch ausgestaltet. Dazu kann der magnetisch wirksame Kern 301 mindestens einen Permanentmagneten, aber auch mehrere Permanentmagnete umfassen oder-wie im hier beschriebenen Ausführungsbeispiel - vollständig aus einem permanentmagnetischen Material bestehen, sodass der magnetisch wirksame Kern 301 der Permanentmagnet ist. Die Magnetisierung des magnetisch wirksamen Kerns 301 des Rotors 30 ist in Fig. 6 durch den Pfeil ohne Bezugszeichen im magnetisch wirksamen Kern 301 dargestellt. Der magnetisch wirksame Kern 301 ist also in radialer Richtung magnetisiert.

Fig. 7 zeigt ein Ausführungsbeispiel der Zentrifugalpumpe 41, 42 in einem Schnitt in axialer Richtung A.

Die Zentrifugalpumpe 41, 42 umfasst eine Pumpeneinheit 40 mit einem Pumpengehäuse 60, welches den Einlass 411; 421 und den Auslass 412; 422 für das zu fördernde Fluid umfasst, wobei der Rotor 30 im Pumpengehäuse 60 angeordnet ist, und eine Mehrzahl von Flügeln 305 zum Fördern des Fluids umfasst. Die Pumpeneinheit 40 ist derart ausgestaltet, dass die Pumpeneinheit 40 so in den Stator 20 einsetzbar ist, dass der magnetisch wirksame Kern 301 des Rotors 30 von den Stirnflächen der Querschenkel 252 umgeben wird.

Das Pumpengehäuse 60 der Pumpeneinheit 40 umfasst ein Basisteil 601 und einen Deckel 602, welche dichtend miteinander verbunden sind, wobei der Auslass 412; 422 vorzugsweise, aber nicht notwendigerweise, vollständig im Basisteil 601 des Pumpengehäuses angeordnet ist. Der Deckel 602 umfasst den Einlass 411; 412, welcher sich in axialer Richtung A erstreckt, sodass das Fluid den Rotor 30 aus der axialen Richtung A anströmt.

Der Rotor 30 umfasst die Mehrzahl von Flügeln 305 zum Fördern des Fluids, beispielsweise insgesamt vier Flügel 305, wobei diese Anzahl beispielhaften Charakter hat. Der Rotor 30 umfasst ferner eine Ummantelung 308, mit welcher der magnetisch wirksame Kern 301 des Rotors 30 umschlossen und vorzugsweise hermetisch eingekapselt ist, sodass der magnetisch wirksame Kern 301 des Rotors 30 nicht in Kontakt mit dem zu fördernden Fluid kommt. Alle Flügel 305 sind auf der Ummantelung 308 angeordnet und bezüglich der Umfangsrichtung des Rotors 30 äquidistant angeordnet. Jeder Flügel 305 erstreckt sich in radialer Richtung nach aussen und ist drehfest mit dem Ummantelung 308 verbunden. Die Flügel 305 können separate Komponenten sein, die dann auf der Ummantelung 308 fixiert werden. Es ist natürlich auch möglich, dass alle Flügel 305 integraler Bestandteil der Ummantelung 38 sind, dass also die Ummantelung 308 mit allen Flügeln 305 einstückig ausgestaltet ist. Der Rotor 30 mit den Flügeln 305 bildet das Flügelrad bzw. das Laufrad der Zentrifugalpumpe 41, 42, mit welchem auf das Fluid oder die Fluide eingewirkt wird.

Die Ausgestaltung der Zentrifugalpumpe 41, 42 mit dem elektromagnetischen Drehantrieb 10 nach dem Prinzip des lagerlosen Motors ermöglicht zudem, dass der Rotor 30 sehr leicht vom Stator 20 trennbar ist. Dies ist ein sehr grosser Vorteil, weil damit beispielsweise der Rotor 30 bzw. die Pumpeneinheit 40, welche den Rotor 30 umfasst, als Einmalteil für den Einmalgebrauch ausgestaltet werden kann. Solche Einmalanwendungen ersetzen heute häufig Prozesse, bei denen früher aufgrund der sehr hohen Reinheitsanforderungen alle diejenigen Komponenten, welche im Prozess mit den zu behandelnden Substanzen in Kontakt kommen, aufwändig gereinigt und sterilisiert werden müssen, beispielsweise mittels Dampfsterilisierung. Bei der Ausgestaltung für den Einmalgebrauch werden diejenigen Komponenten, welche mit den zu behandelnden Substanzen in Kontakt kommen, nur genau einmal verwendet und dann bei der nächsten Anwendung durch neue, das heisst ungebrauchte, Einmalteile ersetzt.

Die erfindungsgemässe Vorrichtung 1 kann daher insbesondere auch derart ausgestaltet sein, dass sie eine wiederverwendbare Vorrichtung umfasst, die für den Mehrfachgebrauch ausgestaltet ist, sowie eine Einmalvorrichtung, die für den Einmalgebrauch ausgestaltet ist. Die wiederverwendbare Vorrichtung umfasst dabei insbesondere diejenigen Komponenten, welche nicht mit dem Fluid in Berührung kommen, also insbesondere die Statoren 20 der Zentrifugalpumpen 41, 42 und beispielsweise zumindest Teile der Drucksensoren 71, 72, 73, Die Drucksensoren 71, 72, 73 können dabei so ausgestaltet sein, dass sie jeweils Einmalteile umfassen und wiederverwendbare Teile.

Auch ist es möglich, dass die erfindungsgemässe Vorrichtung 1 ferner den Vorratsbehälter 8 umfasst. Dabei sind solche Ausgestaltungen möglich, bei welchen der gesamte Vorratsbehälter 8 als Einmalteil ausgestaltet ist, beispielsweise als ein formstabil ausgestalteter Kunststoffbehälter, und solche Ausgestaltungen, bei denen nur eine Komponente des Vorratsbehälters 8 als Einmalteil ausgestaltet ist.

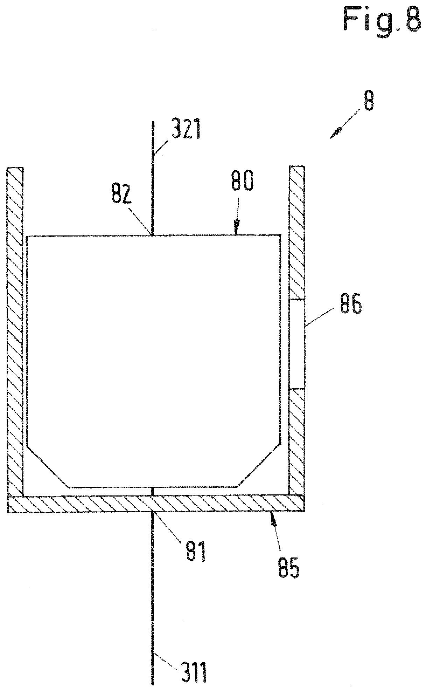

Eine solche Ausgestaltung des Vorratsbehälters 8 ist in einer schematischen Darstellung in Fig. 8 dargestellt. Der Vorratsbehälter 8 umfasst einen flexiblen Einsatz 80 zur Aufnahme des Fluids, welcher aus einem Kunststoff hergestellt ist. Der Einsatz 80 ist vorzugsweise ein flexibler Beutel, beispielsweise ein Plastik- oder ein Kunststoffsack, der zusammengefaltet werden kann, sodass er bei der Lagerung möglichst wenig Platz beansprucht. Der Einsatz 80 kann zusätzliche Ein- oder Auslässe (nicht dargestellt) umfassen, beispielsweise für die Zuführung weiterer Substanzen, z. B. Nährlösungen oder Gase wie z. B. Sauerstoff. Auch ist es möglich, einen weiteren Einlass für die Aufnahme von Sonden oder Messsensoren zu verwenden, mit denen Parameter überwacht werden, z. B. Temperatur, Druck, Konzentrationen etc. Auch können der oder die Einlass/Einlässe für den Stoffaustausch. Speziell können hierbei, beispielsweise bei einer Ausgestaltung als Bioreaktor, notwendige Gase zu- oder abgeführt werden. Insbesondere bei der Zucht von Mikroorganismen oder biologischen Zellen ist es häufig eine Notwendigkeit, dass dem Behälter 80 Sauerstoff bzw. Luft zugeführt und andere Gase, insbesondere Kohlendioxid, aus dem Behälter abgeführt werden können.

Insbesondere können an dem Vorratsbehälter 8 bzw. an dem Einsatz 80 sogenannte Sampling Ports (nicht dargestellt) angeklebt oder angeschweisst sein. Dabei handelt es sich um kurze schlauchartige Kunststoffgebilde, durch welche beispielsweise Proben aus dem Einsatz 80 entnommen werden können. Jeder Sampling Port ist dabei üblicherweise in an sich bekannter Art an seinem aus dem Einsatz 80 herausragenden Ende mit einer Klemme gesichert, sodass keine ungewünschten Substanzen durch diese Sampling Ports in das Innere des Einsatz 80 gelangen können.

Der Vorratsbehälter 8 umfasst ferner einen formstabilen Stützbehälter 85, der als wiederverwendbare Komponente und für die Aufnahme des Einsatz 80 ausgestaltet ist. An der Wand des Stützbehälters 85 kann mindestens Fenster 86 vorgesehen sein, durch welche ein optischer Zugang zu dem Einsatz 80 möglich ist.

Es versteht sich, dass auch bei der in Fig. 8 sehr schematisch dargestellten Ausgestaltung jeder der beiden Schläuche, durch welche das Fluid den Vorratsbehälter 8 mit dem Einsatz 80 verlässt oder in diesen zurückgeführt wird, nämlich der Rückführschlauch 321 und der Zuführschlauch 311, jeweils sowohl für das Entnehmen als auch für das Rückführen des Fluids genutzt werden können. Denn wird die Vorrichtung 1 in dem alternierenden Modus betrieben, so wird der Zuführschlauch 311 in einem Betriebsmodus, beispielsweise im ersten Betriebsmodus, zum Entnehmen des Fluids aus dem Einsatz 80 genutzt, und in dem anderen Betriebsmodus, als beispielsweise im zweiten Betriebsmodus, zum Rückführen des Fluids in den Einsatz 80. Sinngemäss gleiches gilt für den Rückführschlauch 321. Das heisst, beide Schläuche 321 und 311 sind insbesondere jeweils so ausgestaltet, dass durch sie das Fluid angesaugt werden kann, oder es sind andere Massnahmen, beispielsweise bei der Ausgestaltung des Einsatzes 80, vorgesehen, dass das Fluid durch jeden der beiden Schläuche, nämlich den Zuführschlauch 311 und den Rückführschlauch 321, jeweils angesaugt also entnommen als auch rückgeführt werden kann.

Insbesondere im Hinblick auf solche Ausgestaltungen der Vorrichtung 1, welche wiederverwendbare Komponenten für den Mehrfachgebrauch sowie Komponenten für den Einmalgebrauch umfassen, wird ferner ein Satz von Einmalteilen für eine erfindungsgemässe Vorrichtung 1 vorgeschlagen, welcher zumindest die folgenden Komponenten umfasst, die jeweils als Einmalteile ausgestaltet sind: die Filtereinrichtung 2, jeweils eine Pumpeneinheit 40 für jede Zentrifugalpumpe 41, 42, eine Mehrzahl von Schläuchen 311, 312, 321 ,322, welche zum Realisieren der ersten Strömungsverbindung 31 und der zweiten Strömungsverbindung ausgestaltet ist, und optional einen Vorratsbehälter 8 für das Fluid oder einen Einsatz 80 für einen Vorratsbehälter 8..

Ein weiterer wesentliche Aspekt ist es, dass alle Teile, der Vorrichtung 1 zur Tangentialflussfiltration, welche das Fluid berühren, insbesondere auch die Filtereinrichtung 2 bzw. das Filterelement 25, der Vorratsbehälter 8, oder der als Kunststoffbeutel ausgestaltete Einsatz 80, die Strömungsverbindungen 31, 32, gegebenenfalls die Drucksensoren 71, 72, 73 und die Pumpeneinheiten 40 der Zentrifugalpumpen 41 und 42 bzw. ihre Komponenten für gewisse Anwendungsbereiche sterilisierbar sein sollen. Dabei ist es besonders vorteilhaft, wenn alle genannten Komponenten gamma-sterilisierbar sind. Bei dieser Art der Sterilisierung wird die zu sterilisierende Komponente mit Gamma-Strahlung beaufschlagt. Der Vorteil der Gamma-Sterilisierung, beispielsweise im Vergleich zur Dampfsterilisierung, liegt insbesondere darin, dass die Sterilisierung auch durch die Verpackung hindurch erfolgen kann. Gerade bei Einmalteilen ist es eine gängige Praxis, dass die Teile nach ihrer Herstellung in die für den Versand vorgesehene Verpackung gebracht werden und dann noch eine Zeit lagern, bevor sie an den Kunden ausgeliefert werden. In solchen Fällen erfolgt die Sterilisierung erst kurz vor der Auslieferung an den Kunden durch die Verpackung hindurch, was bei einer Dampfsterilisierung oder anderen Verfahren nicht möglich ist.

Die Pumpeneinheit 40 bietet andererseits durch ihre nur einmalige Verwendbarkeit den grossen Vorteil, dass man bei der Konstruktion keinen Wert auf eine gute Reinigbarkeit der Pumpeneinheit 40 legen muss, weil die Pumpeneinheit 40 bei bestimmungsgemässem Gebrauch nicht gereinigt werden muss. Ferner ist es in der Regel nicht notwendig, dass die Pumpeneinheit 40 bzw. ihre Komponenten mehr als einmal sterilisierbar sein müssen. Dies ist insbesondere bei der Gamma-Sterilisierung ein grosser Vorteil, weil die Beaufschlagung mit Gamma-Strahlung bei Kunststoffen zu Degradationen führen kann, sodass eine mehrfache Gamma-Sterilisierung den Kunststoff unbrauchbar machen kann.

Da in der Regel bei Einmalteilen auf eine Sterilisierung unter hohen Temperaturen und /oder unter hohem (Dampf-) Druck verzichtet werden kann, können kostengünstigere Kunststoffe eingesetzt werden, beispielsweise solche, die keine hohen Temperaturen aushalten, oder die nicht mehrfach hohen Temperatur- und Druckwerten ausgesetzt werden können.

Unter Berücksichtigung all dieser Aspekte ist es daher bevorzugt, für die Herstellung der Einmalvorrichtung bzw. der Einmalteile solche Kunststoffe zu verwenden, die zumindest einmal gamma-sterilisierbar sind. Die Materialien sollten dabei gammastabil für eine Dosis von mindestens 40 kGy sein, um eine einmalige Gamma-Sterilisierung zu ermöglichen. Bei der Gamma-Sterilisierung sollten zudem keine giftigen Stoffe entstehen. Zudem ist es bevorzugt, wenn alle Materialien, die mit den zu mischenden bzw. den durchmischten Substanzen in Berührung kommen, USP Class VI Standards erfüllen.

Für die Herstellung der aus Kunststoff bestehenden Teile Pumpeneinheit 40 sind beispielsweise folgende Kunststoffe bevorzugt: PolyEthylene (PE), PolyPropylene (PP), Low Density PolyEthylene (LDPE), Ultra Low Density PolyEthylene (ULDPE), Ethylene Vinyl Acetate (EVA), PolyEthylene Terephthalate (PET), PolyVinylChlorid (PVC), PolyVinyliDene Fluoride (PVDF), Acrylonitrile Butadiene Styrene (ABS), PolyAcryl, PolyCarbonate (PC).

Weniger geeignete oder sogar ungeeignete Materialien für die Herstellung der Kunststoffteile der Einmalvorrichtung 70 sind beispielsweise die unter dem Markennamen Teflon bekannten Materialien Polytetrafluoroethylene (PTFE) und und Perfluoralkoxy-Polymere (PFA). Bei diesen Materialien besteht nämlich bei der Gamma-Sterilisierung die Gefahr, das gefährliche Gase austreten, wie beispielsweise Fluor, das dann giftige oder schädliche Verbindungen wie Flusssäure (HF) bilden kann.

## Patentansprüche

1. Vorrichtung zur Tangentialflussfiltration eines Fluids, umfassend eine Filtereinrichtung (2), welche eine erste Fluidöffnung (21) und eine zweite Fluidöffnung (22) für das Fluid aufweist, sowie ein Filterelement (25) und eine Permeatöffnung (23) zum Abführen eines aus dem Fluid ausgefilterten Permeats, wobei die Vorrichtung ferner eine erste Strömungsverbindung (31) umfasst, mit welcher die erste Fluidöffnung (21) mit einem Vorratsbehälters (8) für das Fluid verbindbar ist, sowie eine zweite Strömungsverbindung (32), mit welcher die zweite Fluidöffnung (22) mit dem Vorratsbehälter (8) für das Fluid verbindbar ist, wobei in der ersten Strömungsverbindung (31) eine erste Zentrifugalpumpe (41) vorgesehen ist, mit welcher das Fluid vom Vorratsbehälter (8) zu der Filtereinrichtung (2) förderbar ist, wobei eine erste Kontrolleinheit (51) zur Ansteuerung der ersten Zentrifugalpumpe (41) vorgesehen ist, und wobei die Filtereinrichtung (2) derart ausgestaltet ist, dass das Fluid zur Tangentialflussfiltration in der Filtereinrichtung (2) im Wesentlichen parallel zum Filterelement (26) strömen kann, **dadurch gekennzeichnet, dass** in der zweiten Strömungsverbindung (32) eine zweite Zentrifugalpumpe (42) für das Fluid vorgesehen ist, mit welcher ein Gegendruck an der zweiten Fluidöffnung (22) erzeugbar ist, wobei eine zweite Kontrolleinheit (52) zur Ansteuerung der zweiten Zentrifugalpumpe (42) vorgesehen ist.

2. Vorrichtung nach Anspruch 1, mit einem Durchflusssensors (6) zur Ermittlung des Durchflusses des Fluids durch die erste Strömungsverbindung (31), wobei die ersten Kontrolleinheit (51) derart ausgestaltet ist, dass sie einen Soll-Wert für den Durchfluss über einen Betriebsparameter der ersten Zentrifugalpumpe (41), insbesondere die Drehzahl, einstellen kann.

3. Vorrichtung nach einem der vorangehenden Ansprüche, wobei eine Mehrzahl von Drucksensoren (71, 72, 73) vorgesehen ist, welche so angeordnet sind, dass mit den Drucksensoren ein Transmembrandruck über das Filterelement (25) ermittelbar ist, und wobei die zweite Kontrolleinheit (52) derart ausgestaltet ist, dass sie einen Soll-Wert für den Transmembrandruck über einen Betriebsparameter der zweiten Zentrifugalpumpe (42), insbesondere die Drehzahl, einstellen kann.

4. Vorrichtung nach Anspruch 3, wobei die Mehrzahl der Drucksensoren (71, 72, 73) einen ersten Drucksensor (71) umfasst, mit welchem ein erster Druck (P1) des Fluids an der ersten Fluidöffnung (21) ermittelbar ist, sowie einen zweiten Drucksensor (72), mit welchem ein zweiter Druck (P2) des Fluids an der zweiten Fluidöffnung (22) ermittelbar ist, sowie einen dritten Drucksensor (73) mit welchem ein dritter Druck (P3) an der Permeatöffnung (23) ermittelbar ist.

5. Vorrichtung nach einem der vorangehenden Ansprüche, wobei eine zentrale Kontrolleinheit (5) vorgesehen ist, welche mit der ersten Kontrolleinheit (51) und mit der zweiten Kontrolleinheit (52) signalverbunden ist, und wobei die zentrale Kontrolleinheit (5) zur Ansteuerung der ersten Kontrolleinheit (51) und der zweiten Kontrolleinheit (52) ausgestaltet ist.

6. Vorrichtung nach einem der vorangehenden Ansprüche, wobei die zweite Zentrifugalpumpe (42) einen Rotor (30) zum Fördern des Fluids umfasst, sowie einen Stator (20), der mit dem Rotor (30) einen elektromagnetischen Drehantrieb (10) zum Rotieren des Rotors um eine axiale Richtung (A) bildet, wobei der Rotor (30) einen magnetisch wirksamen Kern umfasst (301), sowie eine Mehrzahl von Flügeln (305) zum Fördern des Fluids, wobei der Stator (20) als Lager- und Antriebsstator ausgestaltet ist, mit welchem der Rotor (30) berührungslos magnetisch antreibbar und berührungslos magnetisch bezüglich des Stators (20) lagerbar ist.

7. Vorrichtung nach einem der vorangehenden Ansprüche, wobei die erste Zentrifugalpumpe (41) einen Rotor (30) zum Fördern des Fluids umfasst, sowie einen Stator (20), der mit dem Rotor einen elektromagnetischen Drehantrieb (10) zum Rotieren des Rotors (30) um eine axiale Richtung (A) bildet, wobei der Rotor (30) einen magnetisch wirksamen Kern (301) umfasst, sowie eine Mehrzahl von Flügeln (305) zum Fördern des Fluids, wobei der Stator (20) als Lager- und Antriebsstator ausgestaltet ist, mit welchem der Rotor (30) berührungslos magnetisch antreibbar und berührungslos magnetisch bezüglich des Stators (20) lagerbar ist.

8. Vorrichtung nach einem der Ansprüche 6-7, wobei jede Zentrifugalpumpe (41, 42) jeweils eine Pumpeneinheit (40) mit einem Pumpengehäuse (60) umfasst, wobei das Pumpengehäuse (60) einen Einlass (411; 421) und einen Auslass (412; 422) für das zu fördernde Fluid umfasst, wobei der Rotor (30) im Pumpengehäuse (60) angeordnet ist, und eine Mehrzahl von Flügeln (305) zum Fördern des Fluids umfasst, und wobei die Pumpeneinheit (40) derart ausgestaltet ist, dass die Pumpeneinheit (40) in den Stator (20) einsetzbar ist.

9. Satz von Einmalteilen für eine Vorrichtung nach Anspruch 8, welcher zumindest die folgenden Komponenten umfasst, die jeweils als Einmalteile ausgestaltet sind:

     - die Filtereinrichtung (2);
     - jeweils eine Pumpeneinheit (40) für jede Zentrifugalpumpe (41, 42),
     - eine Mehrzahl von Schläuchen (311, 312, 321, 322), welche zum Realisieren der ersten Strömungsverbindung (31) und der zweiten Strömungsverbindung ausgestaltet ist,
     - und optional einen Vorratsbehälter (8) für das Fluid oder einen Einsatz (80) für einen Vorratsbehälter (8).

10. Verfahren zur Tangentialflussfiltration eines Fluids, bei dem das Fluid einer Filtereinrichtung (2) zugeführt wird, welche eine erste Fluidöffnung (21) und eine zweite Fluidöffnung (22) für das Fluid aufweist, sowie ein Filterelement (25) und eine Permeatöffnung (23) zum Abführen eines aus dem Fluid ausgefilterten Permeats, wobei die Filtereinrichtung (2) derart ausgestaltet ist, dass das Fluid zur Tangentialflussfiltration in der Filtereinrichtung (2) im Wesentlichen parallel zum Filterelement (25) geführt wird, bei welchem Verfahren ferner das Fluid mittels einer ersten Zentrifugalpumpe (41) von einem Vorratsbehälters (8) durch eine erste Strömungsverbindung (31) zu der Filtereinrichtung (2) gefördert wird, wobei das Fluid durch eine zweite Strömungsverbindung (32) von der zweiten Fluidöffnung (22) in den Vorratsbehälter (8) rückführbar ist, und wobei die erste Zentrifugalpumpe (41) mit einer ersten Kontrolleinheit (51) angesteuert wird, **dadurch gekennzeichnet, dass** mit einer zweite Zentrifugalpumpe (42), welche in der zweiten Strömungsverbindung (32) vorgesehen ist, ein Gegendruck an der zweiten Fluidöffnung (22) erzeugt wird, wobei die zweite Zentrifugalpumpe (42) mit einer zweiten Kontrolleinheit (52) angesteuert wird.

11. Verfahren nach Anspruch 10, wobei mittels eines Durchflusssensors (6) der Durchfluss des Fluids durch die erste Strömungsverbindung (31) ermittelt wird, und von der ersten Kontrolleinheit (51) ein Soll-Wert für den Durchfluss über einen Betriebsparameter der ersten Zentrifugalpumpe (41), insbesondere die Drehzahl, eingestellt wird.

12. Verfahren nach einem der Ansprüche 10-11, wobei mittels eines ersten Drucksensors (71) ein erster Druck (P1) an der ersten Fluidöffnung (21) ermittelt wird, oder mittels eines zweiten Drucksensors (72) ein zweiter Druck (P3) an der zweiten Fluidöffnung (22), oder mittels eines dritten Drucksensors (73) ein dritter Druck (P3) an der Permeatöffnung (23), und wobei von der zweiten Kontrolleinheit (52) ein Soll-Wert für den ersten Druck (P1) oder für den zweiten Druck (P2) oder für den dritten Druck (P3) über einen Betriebsparameter der zweiten Zentrifugalpumpe (42), insbesondere die Drehzahl, eingestellt wird.

13. Verfahren nach einem der Ansprüche 10-12, wobei mittels einer Mehrzahl von Drucksensoren (71, 72, 73) ein Transmembrandruck über das Filterelement (26) ermittelt wird, und von der ersten Kontrolleinheit (51) oder von der zweiten Kontrolleinheit (52) ein Soll-Wert für den Transmembrandruck über einen Betriebsparameter der ersten Zentrifugalpumpe (41) oder über einen Betriebsparameter der zweiten Zentrifugalpumpe (42) eingestellt wird, wobei der Betriebsparameter vorzugsweise die Drehzahl der ersten Zentrifugalpumpe (41) oder der zweiten Zentrifugalpumpe (42) ist.

14. Verfahren nach einem der Ansprüche 10-13, wobei die Tangentialflussfiltration in einem alternierenden Modus durchgeführt wird, welche einen ersten Betriebsmodus umfasst, in welchem das Fluid von der ersten Fluidöffnung (21) zu der zweiten Fluidöffnung (22) strömt, sowie einen zweiten Betriebsmodus, in welchem das Fluid von der zweiten Fluidöffnung (22) zu der ersten Fluidöffnung (21) strömt.

15. Verfahren nach Anspruch 14, wobei nach einem vorgebbaren Zeitschema zwischen dem ersten Betriebsmodus und dem zweiten Betriebsmodus gewechselt wird.

Fig.1

Fig.2

Fig.3

Fig.4

Fig.5

EP 4 101 520 A1

Fig.6

EP 4 101 520 A1

Fig.7

EP 4 101 520 A1

# Fig.8

Europäisches
Patentamt

European
Patent Office

Office européen
des brevets

# EUROPÄISCHER RECHERCHENBERICHT

**Nummer der Anmeldung**

**EP 22 17 6278**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 272 844 A (BIO FLO LTD [GB]) 1. Juni 1994 (1994-06-01) * Seite 3, Absatz 2 - Seite 12, Absatz 1; Abbildung 1 * ----- | 1-15 | INV. B01D61/08 B01D61/10 B01D61/12 B01D61/18 |
| A | DECLOUX ET AL: "Treatment of acidic wastewater arising from the refining of vegetable oil by crossflow microfiltration at very low transmembrane pressure", PROCESS BIOCHEMISTRY, ELSEVIER LTD, GB, Bd. 42, Nr. 4, 19. März 2007 (2007-03-19), Seiten 693-699, XP005933483, ISSN: 1359-5113, DOI: 10.1016/J.PROCBIO.2006.10.013 * Kapitel 2.1 * ----- | 1-15 | B01D61/20 B01D61/22 B01D61/28 B01D61/30 B01D61/32 B01D65/08 |
| A | MICHALSKI M C ET AL: "Microfiltration of Raw Whole Milk to Select Fractions with Different Fat Globule Size Distributions: Process Optimization and Analysis", JOURNAL OF DAIRY SCIENCE, AMERICAN DAIRY SCIENCE ASSOCIATION, US, Bd. 89, Nr. 10, 1. Oktober 2006 (2006-10-01), Seiten 3778-3790, XP026957221, ISSN: 0022-0302 [gefunden am 2006-10-01] * das ganze Dokument * ----- | 1-15 | |
| A | EP 3 570 415 A1 (LEVITRONIX GMBH [CH]) 20. November 2019 (2019-11-20) * Absatz [0145] - Absatz [0147] * ----- | 1-15 | RECHERCHIERTE SACHGEBIETE (IPC) B01D |
| A | WO 01/10540 A2 (MICROFILTRATION TECHNOLOGY APS [DK]; MOELLER HANNE ELLEN [DK] ET AL.) 15. Februar 2001 (2001-02-15) * Beispiel 1 * ----- -/-- | 1-15 | |

Der vorliegende Recherchenbericht wurde für alle Patentansprüche erstellt

| Recherchenort | Abschlußdatum der Recherche | Prüfer |
|---|---|---|
| München | 25. Oktober 2022 | Kukolka, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

**Nummer der Anmeldung**

**EP 22 17 6278**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2020/020569 A1 (UNIVERCELLS S A [BE]) 30. Januar 2020 (2020-01-30) * Abbildung 1 * ----- | 1-15 | |
| A | WO 2016/145198 A1 (VIATAR LLC [US]) 15. September 2016 (2016-09-15) * Absatz [0033]; Abbildung 1 * ----- | 1-15 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| **München** | **25. Oktober 2022** | **Kukolka, Florian** |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

.....................................................................................
& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 17 6278

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2022

| Im Recherchenbericht angeführtes Patentdokument | Datum der Veröffentlichung | Mitglied(er) der Patentfamilie | Datum der Veröffentlichung |
|---|---|---|---|
| GB 2272844 A | 01-06-1994 | KEINE | |
| EP 3570415 A1 | 20-11-2019 | EP 3570415 A1 | 20-11-2019 |
| | | US 2019356195 A1 | 21-11-2019 |
| WO 0110540 A2 | 15-02-2001 | AU 6426800 A | 05-03-2001 |
| | | BR 0012993 A | 18-06-2002 |
| | | CA 2378335 A1 | 15-02-2001 |
| | | EP 1229996 A2 | 14-08-2002 |
| | | JP 2003506206 A | 18-02-2003 |
| | | WO 0110540 A2 | 15-02-2001 |
| WO 2020020569 A1 | 30-01-2020 | AU 2019309101 A1 | 04-03-2021 |
| | | CA 3106661 A1 | 30-01-2020 |
| | | CN 112912482 A | 04-06-2021 |
| | | EP 3830235 A1 | 09-06-2021 |
| | | JP 2021531767 A | 25-11-2021 |
| | | KR 20210069032 A | 10-06-2021 |
| | | SG 11202100317Y A | 25-02-2021 |
| | | US 2021155892 A1 | 27-05-2021 |
| | | WO 2020020569 A1 | 30-01-2020 |
| WO 2016145198 A1 | 15-09-2016 | US 2018043084 A1 | 15-02-2018 |
| | | US 2020268960 A1 | 27-08-2020 |
| | | WO 2016145198 A1 | 15-09-2016 |

EPO FORM P0461

Für nähere Einzelheiten zu diesem Anhang : siehe Amtsblatt des Europäischen Patentamts, Nr.12/82